# EUROPEAN PATENT APPLICATION

(11) **EP 1 482 229 A1**
(43) Date of publication of application: **01.12.2004**
(21) Application number: 02745863.7
(22) Date of filing: 05.07.2002
(51) Int. Cl.: F16L 11/11, H02G 3/04

(54) **STORAGE MEMBER FOR LONG MATERIAL AND METHOD OF MANUFACTURING THE STORAGE MEMBER**

(71) Applicant: Mirai Industry Co., Ltd., Anpachi-gun, Gifu 503-0295 (JP)
(72) Inventor: Shimizu, Shohachi, Mirai Industry co., Ltd., Gifu 503-0295 (JP); Kitamura, Yusuke,Mirai Industry Co., Ltd., Gifu 503-0295 (JP)
(74) Representative: Cabinet Hirsch
(86) International application number: PCT/JP2002/006845
(87) International publication number: WO 2004/005784

(57) **Abstract**

A housing member for housing a long material includes a base and a cover. The base includes an opening extending along a longitudinal direction, and a plurality of convex portions arranged at predetermined pitches along a longitudinal direction. The cover covers the opening of the base. Each of the convex portions of the cover extends along a circumferential direction of the cover. The cover includes a plurality of convex portions provided at predetermined intervals along the longitudinal direction of the cover. The arranged pitch of the convex portions of the base and the arranged pitch of the convex portions of the cover are the same. When the cover is assembled to the base, the convex portion of the cover and the convex portion of the base are fitted to each other so as to overlay on each other.

## Description

### TECHNICAL FIELD

The present invention relates to a housing member for housing an elongate material, such as a wire material, optical cable, electric wire, and pipe material, for example, and its manufacturing method.

### BACKGROUND ART

Housing members are conventionally used to lay wire materials and pipe materials esthetically without impairing views or to protect such materials from wind and rain. However, in general, housing members are made of concrete or metal, and therefore are heavy in weight. Therefore, in order to reduce the weight, the housing members molded of a synthetic resin are sometimes used. Light housing members made of a resin have fewer burdens on transportation even when they are molded to be long, and there are a smaller number of connecting spots for the housing members at the time of a laying operation, thus enhancing the operation efficiency. As compared with housing members of concrete and metal, cutting work or the like is easily performed for the housing members made of resin at a construction site, which enhances the working efficiency, and it is possible to newly construct or renew the housing members in a short construction period. Moreover, there is no fear of corrosion in the housing members made of a resin as in metal housing members. Therefore, when it is desired to use housing members that will not rust, and when it is not desired to make noise during piping work, a housing member made of a resin is preferably used.

When a cable is protected by using a conventional housing member made of resin, the following methods are cited. The first method is a method for previously laying a pipe-shaped housing member with a lid put thereon in the construction site and pulling the cable into the hollow part of the housing member. The second method is a method for laying the cable on the base formed into a U-shape in section, opening upward, and constructing a part of the housing member, and thereafter, covering the base with a cover, for example, in a half-pipe shape opening downward, from above.

The above described housing member made of resin extends in a flat plate shape along its longitudinal direction. Therefore, the strength of the housing member made of resin is low as compared with the strength of housing members made of metal and concrete material. In order to maintain strength, it is necessary to increase the plate thickness for the housing member, and as a result, the housing member becomes heavy in weight. As a result, the advantage of being made of resin is lost, thus hampering transportation and operation. Further, in order to carry out wiring according to the aforementioned second method, the base and the cover have to be separately molded, and therefore the cost increases.

Connecting tools are used for connecting a plurality of the aforementioned housing members along the entire lay-out path. The connecting tool connects end portions of the adjacent two housing members. The connecting tool has a semi-cylindrical connecting base body and a similarly semi-cylindrical connecting cover body.

When the cable is laid by using the aforementioned housing member constituted by the base and the cover, adjacent end portions of the bases in the two housing members are disposed on the connecting base body of the connecting tool and connected. The required number of bases for the housing members in the state in which they are connected by the connecting base bodies are placed along the lay-out path. Thereafter, the cable is disposed into the bases from the upward openings of the bases. In the state in which the bases house the cable, the bases are covered with the covers of the aforesaid housing members, and the connecting base body is covered with the connecting cover body of the aforesaid connecting tool. In the state in which the aforesaid covers and connecting cover body cover the corresponding bases and the connecting base body, the strength of the connecting portion by the connecting tool is firm. However, in the state in which the aforesaid base is only connected to the connecting base body, the connection is imperfect.

When the above-described connecting tool is used, especially at the time of lay-out operations when the aforesaid housing members are exposed or buried outdoors, there exist the following problems. Specifically, the road surface and the ground outdoors (burial location) on which the housing member is laid are not usually flat. Therefore, if the cable is placed on a large number of the aforesaid bases which are incompletely connected by only the connecting base bodies along the lay-out path, the bases and the connecting base bodies are easily disconnected by the impact due to placement of the cable and the weight of the cable. Further, the connection state is not stabilized, and therefore there is the possibility that the connecting base bodies will be displaced with respect to the bases and disconnected. Therefore, the lay-out operation for the cable becomes troublesome and difficult.

When the housing members are laid on a place which is not flat, or on a place with many obstacles, a consideration is whether to install a plurality of racks along the lay-out path and place the housing members on the racks. In this case, the housing members are sometimes bent between two adjacent racks. Especially as the housing member including the base and the cover, becomes difficult to attach and detach the cover to and from the base and as a result that the housing member bends. In the case in which the housing member has flexibility, the bending further increases. In order to relieve or prevent bending of the housing member, it is suitable to increase the number of racks per unit length, but since a large number of racks are needed, the lay-out operation becomes cumbersome.

### DISCLOSURE OF THE INVENTION

An object of the present invention is to provide a housing member for an elongate material which is high in strength, light in weight and easy to handle, and is capable of being manufactured at low cost, and a manufacturing method therefor.

Another object of the present invention is to provide a connecting tool which easily and reliably connects the housing members, and enhances efficiency in a lay-out operation.

Still another object of the present invention is to prevent bending of the housing member and make it possible to place the housing members with a minimum number of racks.

In order to achieve the above-described objects, the present invention provides a housing member for housing an elongate material. The housing member comprises a base and a cover. The base has an opening extending along a longitudinal direction of the housing member, and a plurality of convex portions arranged at predetermined pitches along the longitudinal direction. Each of the convex portions extends along a circumferential direction of the base. The cover covers the opening of the base. The cover comprises a plurality of convex portions arranged at predetermined pitches along the longitudinal direction. Each of the convex portions of the cover extends along a circumferential direction of the cover. The arranged pitch of the convex portions of the base and the arranged pitch of the convex portions of the cover are the same or have a relationship of an integral multiple. The convex portions of the cover and the convex portions of the base are fitted to each other so as to be overlaid on each other when the cover is assembled to the base.

The present invention further provides another housing member for housing an elongate material. The housing member is formed by dividing a cylindrical molded product made of a resin, which has annular convex portions arranged at predetermined pitches along a longitudinal direction of the housing member, into a base and a cover along the longitudinal direction. The base and the cover each have semi-annular convex portions arranged at the aforesaid pitches along the longitudinal direction of the housing member. The cover is assembled to the base to cover an opening of the base. When the cover is assembled to the base, the convex portions of the cover and the convex portions of the base are fitted to each other so as to be overlaid on each other.

The present invention further provides a manufacturing method for the housing member. The method includes the step of preparing a cylindrical intermediate molded product made of a resin which is formed by integrally molding the base and the cover with a portion to be cut off therebetween, and the step of dividing the intermediate molded product along its longitudinal direction by cutting off the portion to be cut off and obtaining the base and the cover which are separated from each other.

The present invention further provides a connecting device comprising housing members for housing an elongate material and a connecting tool for connecting the housing members. The housing member has a base and a cover which are assembled to each other. The base and the cover each have convex portions arranged at predetermined pitches along a longitudinal direction of the housing member. The connecting tool forms an approximately cylindrical shape. Connecting ports are provided at both ends in an axial direction of the connecting tool. One end of the housing member is connected to each of the connecting ports. The connecting tool has a connecting base body and a connecting cover body which are separable to divide the connecting port into two and capable of being assembled to each other. Displacement preventing means, which connects both the base and the connecting base body by vertically overlaying the base and the connecting base body on each other, prevents the base and the connecting base body connected to each other from being displaced vertically, and is provided between the base and connecting base body.

The present invention further provides a connecting tool for connecting housing members for housing an elongate material. The housing member has a base and a cover which are assembled to each other. The base and the cover each have convex portions arranged at predetermined pitches along a longitudinal direction of the housing member. The connecting tool forms an approximately cylindrical shape. Connecting ports are provided at both ends in an axial direction of the connecting tool. One end of the housing member is connected to each of the connecting ports. The connecting tool has a connecting base body and a connecting cover body which are separable to divide the connecting port into two and capable of being assembled to each other. The connecting base body includes displacement preventing means which connects both the base and the connecting base body by overlaying the base on the connecting base body, and prevents the base and the connecting base body as connected to each other from being displaced vertically.

The present invention further provides a placement structure for a cylindrical housing member having flexibility for housing an elongate material. The housing member has annular convex portions arranged at predetermined pitches along a longitudinal direction of the housing member. The placement structure comprises racks and rail bodies laid on the racks. The housing member is fixed to the rail body to extend along the rail body.

The present invention further provides a fixing tool for fixing a housing member, which has flexibility and includes a space for housing an elongate material inside, on a rail body laid on a rack. The fixing tool comprises a held portion which is held at the rail body, and a fixing portion facing an upper surface of the rail body. The fixing portion fixes the housing member to the rail body in a state in which the held portion is held at the rail body.

The present invention further provides a fixing tool for fixing a housing member for housing an elongate material to a placement section. The housing member has a base and a cover which are assembled to each other. The base and the cover respectively have convex portions arranged at predetermined pitches along a longitudinal direction of the housing member. The fixing tool comprises a body portion, a locking portion and a fixing portion fixed to the placement section. The body portion is fitted into a concave portion provided between both adjacent convex portions of the base. The locking portion is locked at a portion of the base, which does not interfere with mounting and dismounting of the cover to and from the base on an occasion of mounting and dismounting of the cover to and from the base to prevent the base from rising with respect to the placement section.

### BRIEF DESCRIPTION OF THE DRAWINGS

Figure 1 is a perspective view of an intermediate molded product of a housing member in a first embodiment in which the present invention is embodied;
Figure 2 is a perspective view of a base and a cover which are formed by cutting off a portion to be cut off from the molded product in Figure 1;
Figure 3(a) is a sectional view of each of convex portions of the cover and the base of the intermediate molded product;
Figure 3(b) is a sectional view of each of the convex portions of the cover and the base in a state in which a portion to be cut off is cut off from the molded product in Figure 3(a);
Figure 4 is a perspective view of a housing member T in a usage state;
Figure 5 is a side view of a housing member in a state in which the cover covers the base;
Figure 6 is a sectional view of each of the convex portions taken along the line 6-6 in Figure 5;
Figure 7 is a partially enlarged view of a fitting portion and a fitted portion in Figure 6;
Figure 8 is a partially enlarged sectional view of the fitting portion and the fitted portion of the housing member taken along the line 8-8 in Figure 5;
Figure 9 is a plane view of a connected mold device for performing extrusion molding of the intermediate molded product;
Figure 10 is a sectional view taken along the line 9-9 in Figure 9;
Figure 11 is a perspective view of a housing member including first and second reinforcement tools in a second embodiment of the present invention;
Figure 12 is an exploded perspective view of Figure 11;
Figure 13 is a sectional view taken along the line 13-13 in Figure 11;
Figure 14 is a partially enlarged view of a locking portion in Figure 13;
Figure 15 is an enlarged sectional view taken along the line 15-15 in Figure 11;
Figure 16 is a view showing a state in which a second reinforcement tool is provided at the cover of the housing member in Figure 8;
Figure 17 is an exploded perspective view of a connecting tool for connecting the housing members and the housing members in a third embodiment of the present invention;
Figure 18 is a perspective view showing a state in which the bases of the housing members in Figure 4 are connected on a connecting base body of the connecting tool in Figure 17;
Figure 19 is a plane view showing a state in which the bases of the housing members in Figure 4 are connected on a connecting base body of the connecting tool in Figure 17;
Figure 20 is a sectional view taken along the line 20-20 in Figure 19;
Figure 21 is a partially enlarged plane view of respective overlaid portions of the connecting base body of the connecting tool and the bases of the housing members in Figure 19;
Figure 22 is a sectional view taken along the line 22-22 in Figure 21;
Figure 23 is a sectional view taken along the line 23-23 in Figure 21;
Figure 24 is a perspective view of a connecting cover body and a connecting base body in an exploded state;
Figure 25 is a perspective partial view of the connecting tool in a state in which two housing members are connected;
Figure 26 is a plane view of the connecting tool in a state in which two housing members are connected;
Figure 27 is a sectional view taken along the line 27-27 in Figure 26;
Figure 28 is a perspective view of a separated state of each kind of members necessary for placing the housing member, in a fourth embodiment of the present invention;
Figure 29 is an enlarged perspective view of a portion at which a rail body is fixed to a rack via a connecting member;
Figure 30 is a perspective view of the connecting member;
Figure 31(a) is a view showing a state before the connecting member is fixed to the rack;
Figure 31(b) is a view showing a state in which the connecting member is fixed to the rack;
Figure 32 is a sectional view taken along the line 32-32 in Figure 31(b);
Figure 33 is a perspective view showing a disposition relationship of the rail body, a fixing member and the base of the housing member;
Figure 34 is a perspective view of the fixing member in Figure 33;
Figure 35 is a sectional view of a state in which the fixing member in Figure 33 is held at the rail body;
Figure 36 is a sectional view of a state in which the cover of the housing member is fixed to the rail body via the fixing member;
Figure 37 is a sectional view taken along the line 37-37 in Figure 36;
Figure 38(a) is a schematic diagram showing a state in which a plurality of connected housing members are placed on the racks;
Figure 38(b) is a schematic view showing a state in which a plurality of connected intermediate molded products are placed on the racks;
Figure 39 is a perspective view of a fixing tool for the housing member in a fifth embodiment of the present invention;
Figure 40 is a perspective view of a separated state for a cable, the base and the cover constructing the housing member, and a seat to which the housing member is fixed;
Figure 41 is a perspective partial view of a state in which the base of the housing member is fixed to the placement section via the seat and the fixing tool;
Figure 42 is a sectional view of a state in which the base of the housing member is fixed to the placement section via the seat and the fixing tool;
Figure 43 is a partial side view of the state in which the base of the housing member is fixed to the placement section via the seat and the fixing tool;
Figure 44 is a partially perspective view of the state in which the base of the housing member is fixed to the placement section by a fixing tool in an example modification;
Figure 45 is an exploded perspective view showing the housing member in a seventh embodiment;
Figure 46 is a side view showing the cover and the base of the housing member in Figure 45;
Figure 47 is a sectional view showing an intermediate molded product of Figure 45;
Figure 48 is a perspective view of the housing member in Figure 45;
Figure 49 is a sectional view taken along the line 49-49 in Figure 48;
Figure 50 is a sectional view taken along the line 50-50 in Figure 48;
Figure 51 is a side view of the cover and the base in an eighth embodiment;
Figure 52 is a partial sectional view showing the assembled state of the cover and the base in Figure 51;
Figure 53 is a side view of the housing member in an example modification; and
Figure 54 is a plane view of the housing member in an example modification.

### BEST MODE FOR CARRYING OUT THE INVENTION

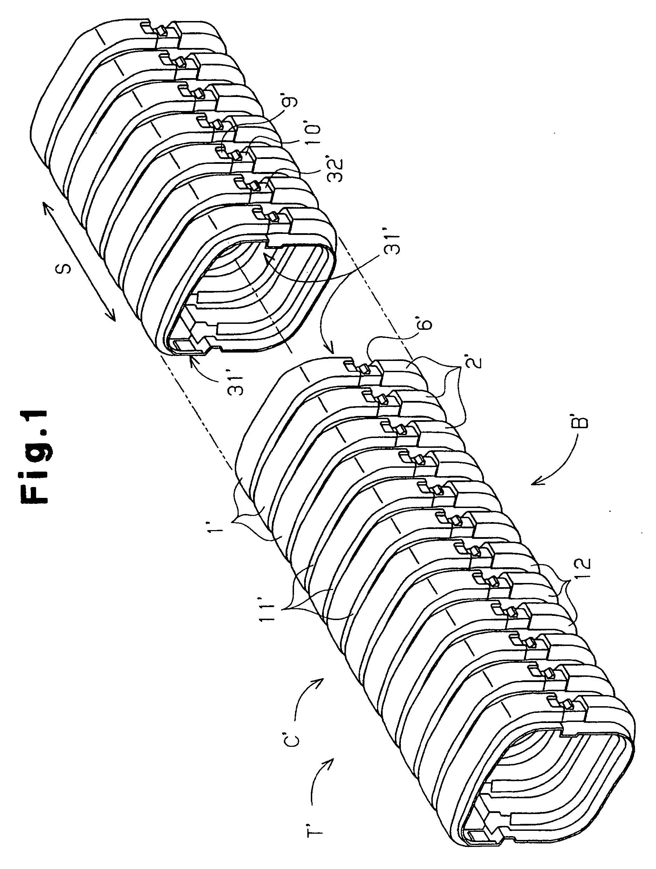

Hereinafter, a first embodiment of the present invention will be explained based on Figure 1 to Figure 10. In the following explanation, for each part of an intermediate molded product T' of a housing member (trough) T, "dash" is given to the reference numeral and character of each part of the finished product, and thereby the housing member T and the intermediate molded product T' are distinguished.

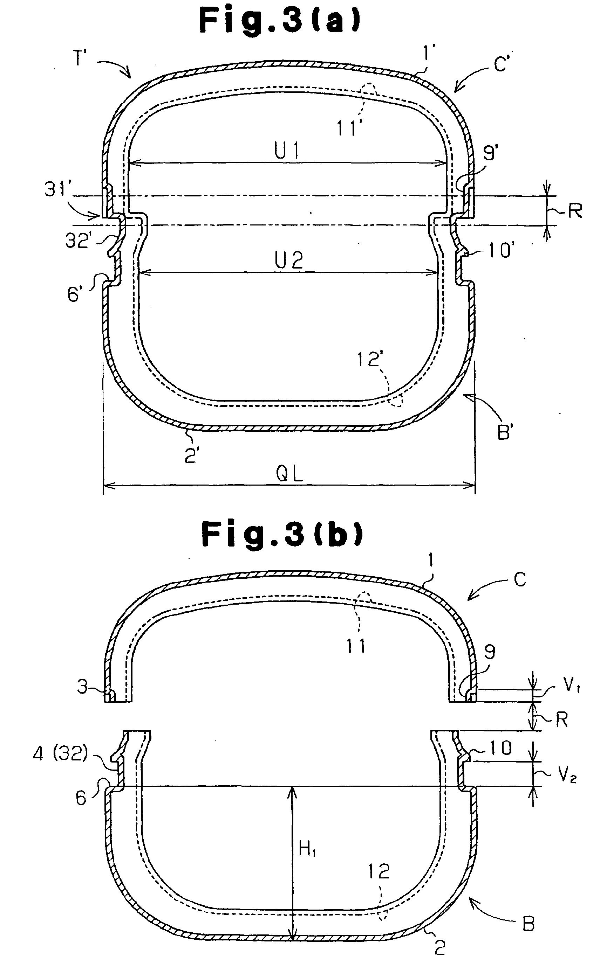

As shown in Figure 1, in the intermediate molded product T' forming a cylindrical shape made of a resin, the shape of a section perpendicular to its longitudinal direction forms an approximately square shape, and has approximately uniform wall thickness. The intermediate molded product T' has a pair of left and right portions to be cut off 31', which continue along a longitudinal direction S, a cover C' located at an upper position from them, and a base B' located at a lower position from the aforesaid pair of portions to be cut off 31'. The pair of portions to be cut off 31', the cover C' and the base B' are integrally molded. As shown in Figure 3(a), the portion to be cut off 31' is located at an upper position from a center in a height direction of both side wall portions of the intermediate molded product T', and has a predetermined width (cutoff width) R in the height direction. The portion to be cut off 31' has a step in a width direction of the intermediate molded product T'.

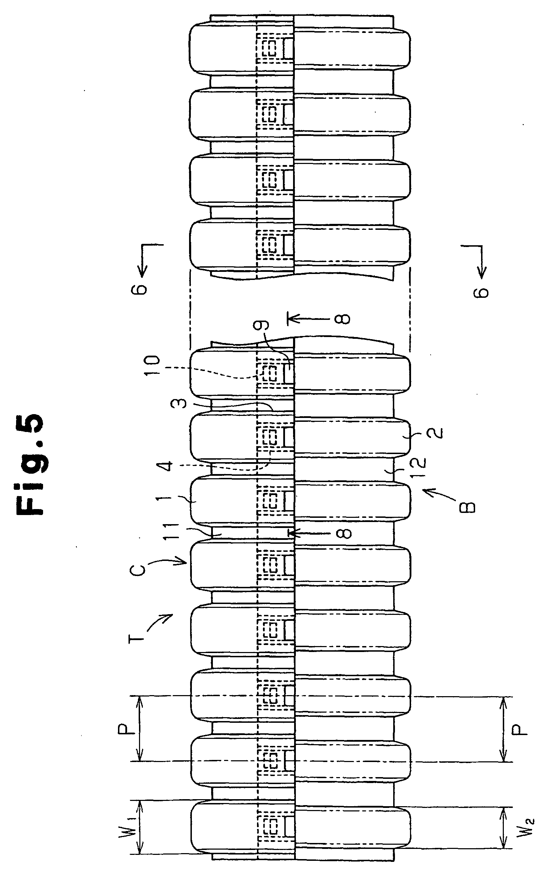

As shown in Figure 1 and Figure 3(a), the cover C' is provided with a plurality of convex portions 1' each having a predetermined width direction dimension QL. The base B' is also provided with a plurality of convex portions 2' each having the same width direction dimension QL as the cover C'. A pair of connecting portions 32' are formed between each of the convex portions 1' and the corresponding convex portion 2' of the base B'. The convex portions 1' are arranged at predetermined pitches P along the longitudinal direction S of the intermediate molded product T', and the convex portions 2' are also arranged at the same pitches P as the convex portions 1' along the longitudinal direction S of the intermediate molded product T' (see Figure 5). A pair of connecting portions 32' continue to both ends of each of the convex portions 2'. Therefore, the intermediate molded product T' forms a concavo-convex shape, that is, a wave shape in its longitudinal direction. As shown in Figure 5, a width W₁ of each of the convex portions 1' of the cover C' is larger than a width W₂ of each of the convex portions 2' of the base B'.

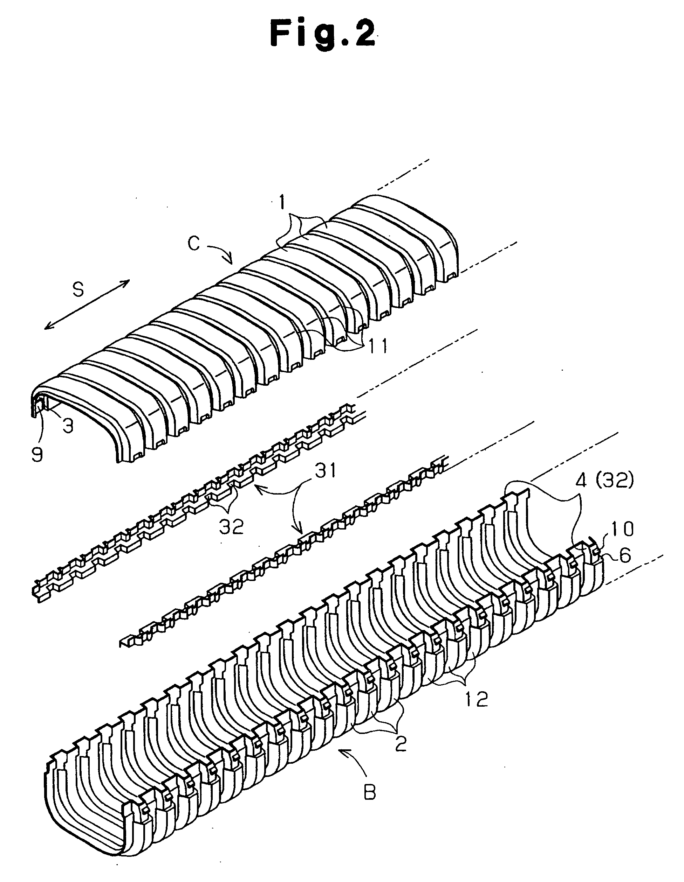

As shown in Figure 2, as a result that the portions to be cut off 31' are cut off, the intermediate molded product T' is divided vertically into two, and a cover C and a base B of the housing member T are obtained. The intermediate molded product T' is an intermediate product in the molding process of the housing member T, and is subjected to continuous blow extrusion molding according to a method that will be described later. In Figure 2, a cutoff portion 31 represents a portion obtained by cutting off the portion to be cut off 31' of the intermediate molded product T'.

Figure 3(a) is a sectional view in a region of the convex portions 1' and 2' of the intermediate molded product T', and Figure 3(b) is a sectional view in a region of the convex portions 1 and 2 of the housing member T in the state in which the portion to be cut off 31' has been cut off. As shown in Figure 3(b), the connecting portion 32 after the portion to be cut off 31' has been cut off is the portion corresponding to a fitted portion 4. Fitting portions 3 provided at both ends of each of the convex portions 1 of the cover C are fitted over the outsides of the fitted portions 4 provided at both ends of each of the convex portions 2 of the base B. A cross sectional shape (a sectional shape along a horizontal plane perpendicular to the paper surface of Figure 3 (b)) of the fitted portion 4 is approximately similar to a cross-sectional shape of the fitting portion 3, and is smaller than the cross-sectional shape of the fitting portion 3.

As shown in Figure 1, in the base B', a concave portion 12' is formed between both the adjacent convex portions 2'. Similarly, in the cover C', a concave portion 11' is formed between both the adjacent convex portions 1'. As shown in Figure 3(a), an inner width U₂ of each of the concave portions 12' of the base B' is smaller than an inner width U₁ of the concave portion 11' of the cover C'. In a portion continuing from the convex portion 1' of the cover C' to the portion to be cut off 31', a locking projection 9' which projects to an inside of the convex portion 1' is provided at each end portion of the convex portion 1'. The aforesaid connecting portions 32' for the fitted portion is provided with a locked projection 10' which has a plane forming a diagonal shape in a vertical direction and projects to an outside thereof. An abutting step portion 6' is formed between the connecting portion 32' and the convex portion 2' of the base B'.

An upper end portion of the aforesaid portion to be cut off 31' is located in the middle of the aforesaid locking projection 9' in the vertical direction, and its lower end is located in the upper region of the connecting portion 32' from the aforesaid locked projection 10'. When a pair of the portions to be cut off 31' are cut off along the longitudinal direction S from the intermediate molded product T', the portions to be cut off 31' become an unneeded pair of cutoff portions 31, and the intermediate molded product T' is divided vertically into two, thus obtaining the cover C and the base B that construct the housing member T (see Figure 2 and Figure 3(b)). As shown in Figure 3(b), a dimension V₁ in the vertical direction of the locking projection 9 of the cover C is smaller than a dimension V₂ between the abutting step portion 6 and a lower end of the locked projection 10 in the base B. A distance in the vertical direction from an outer surface of a bottom wall of the convex portion 2 of the base B to the abutting step portion 6 corresponds to a height H₁ of the convex portion 2 of the cover C.

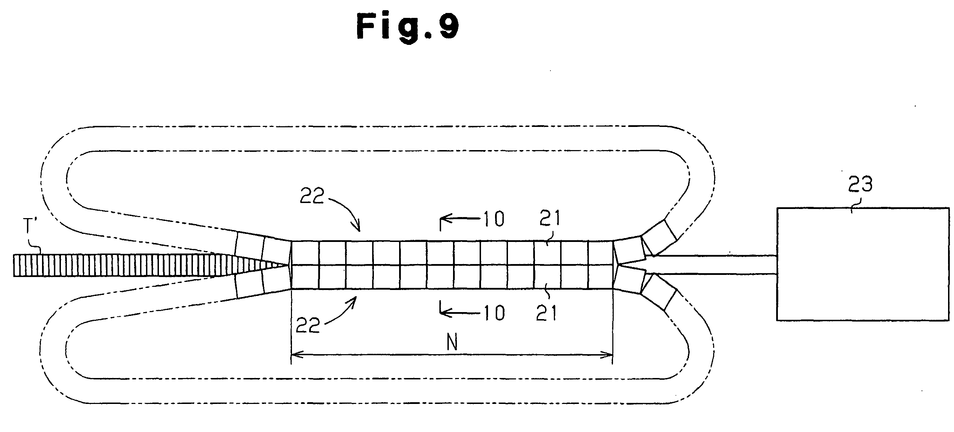

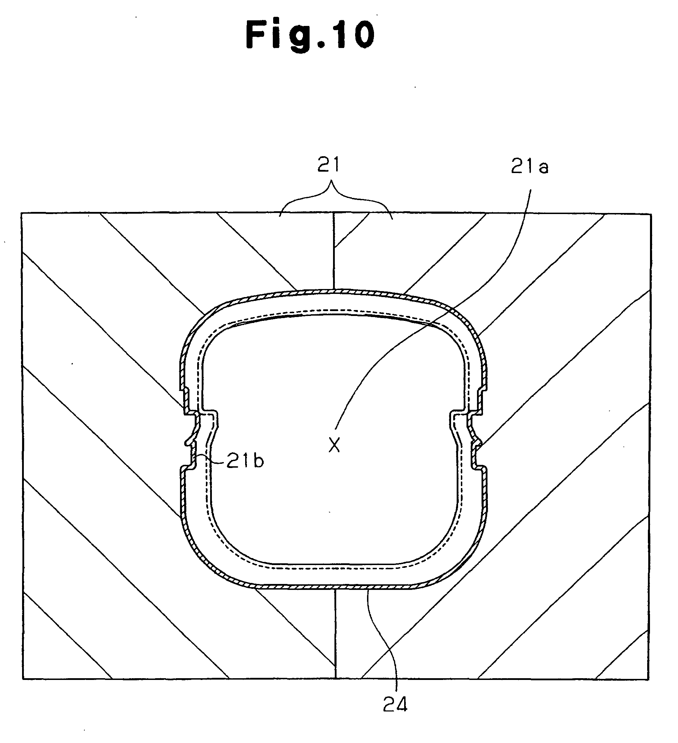

Next, a molding method for the above-described intermediate molded product T' will be explained. The intermediate molded product T' is molded by a continuous extrusion molding method by a connected mold 22 which is made by connecting single molds 21 in a caterpillar shape as shown in Figure 9 and Figure 10. On an inner surface of a cavity 21a formed by a pair of single molds 21 which are in close contact with each other, a concavo-convex strip 121b corresponding to an outer shape of the aforesaid intermediate molded product T' is formed.

As shown in Figure 9, a pair of connected molds 22 which are formed by connecting a number of single molds 21 are disposed to be opposed to each other so as to perform circulatory travel within the horizontal plane, and the left and right connected molds 22 which perform circulatory travel are in close contact with each other in the regions of a molding section N. After the connected molds 22 pass the regions of the molding section N, both the single molds 21 which are in close contact with each other are separated to the left and right, and thereby mold release is performed.

A molten resin 24 extruded from an extruder 23 is pressed by air pressure against an inner surface of the cavity 21a formed by the left and right single molds 21 in the regions of the molding section N. As a result, the intermediate molded products T' each having uniform wall thickness, in which the base B', the cover C' and a pair of portions to be cut off 31' are integrated, are continuously molded by extrusion. The intermediate molded product T' is cut to length for use (4 to 5 m).

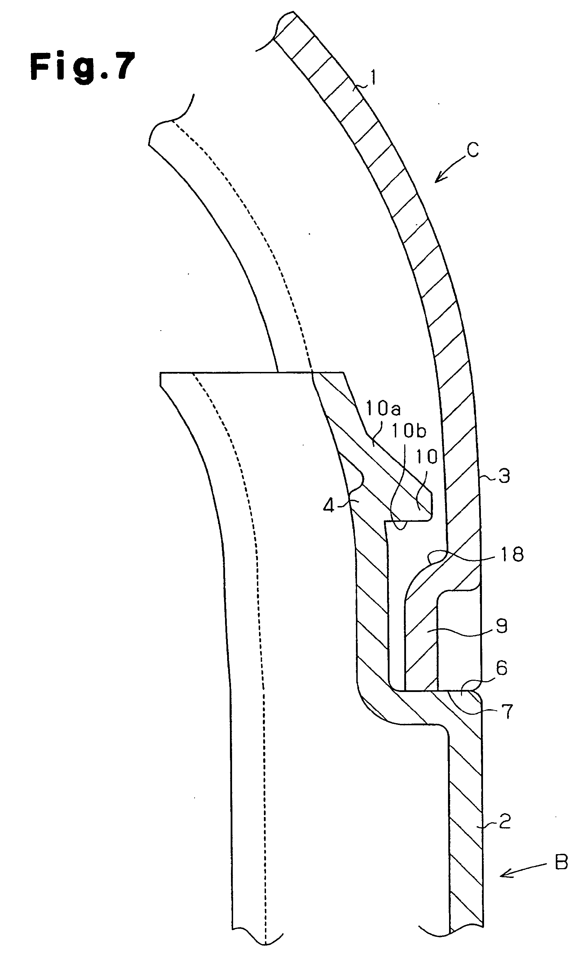

As shown in Figure 7, in the housing member T, the fitting portion 3 which is fitted on the outer side of the convex portion 2 of the base B is formed at an end portion of each of the convex portions 1 of the cover C. The fitting portion 3 has a locking projection 9. A step portion 18 is formed between the fitting portion 3 and the locking projection 9. The fitted portion 4 which continues to the convex portion 2 of the base B and has an approximately similar small section to the section thereof is formed at an end portion of the convex portion 2 of the base B. The fitted portion 4 has a locked projection 10. The fitted portion 4 is fitted in an inner side of the fitting portion 3 in a width direction of the housing member T. The fitted portion 4 corresponds to a part of the connecting portion 32' before the portion to be cut off 31' is cut off. Specifically, by only molding the intermediate molded product T' of the single structure, the separate cover C and the base B can be obtained, which construct the intended housing member T.

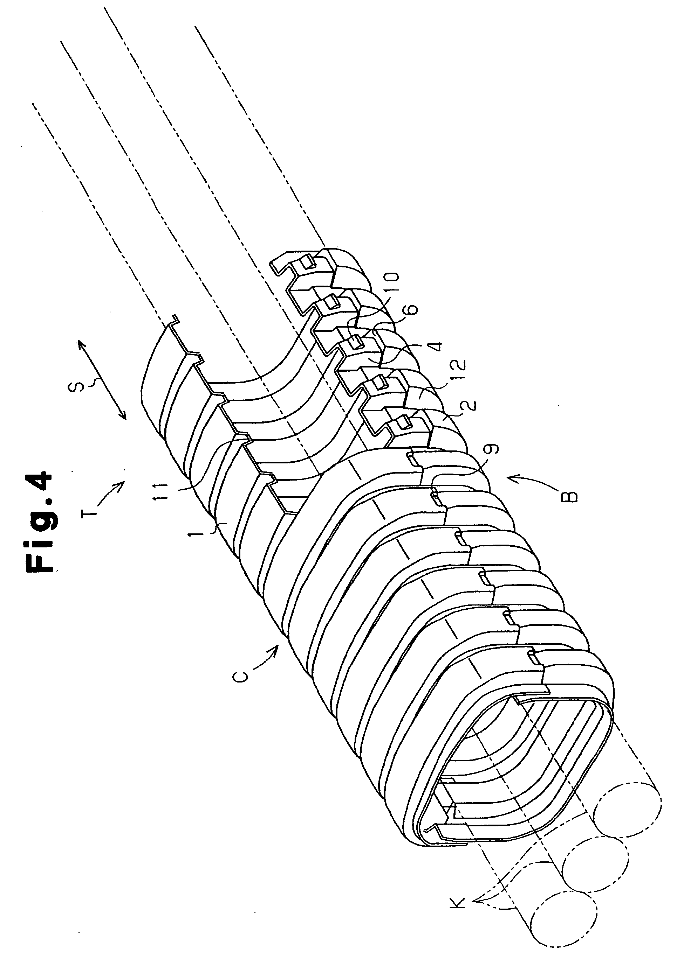

As shown in Figure 4, the housing member T of long length is used for protecting a cable K by placing the cable K on the base B, and covering the base B with the cover C from above this, or by inserting the cable K into a space which is defined by the cover C and the base B after the base B is covered with the cover C. A method for covering the base B with the cover C will be explained hereinafter.

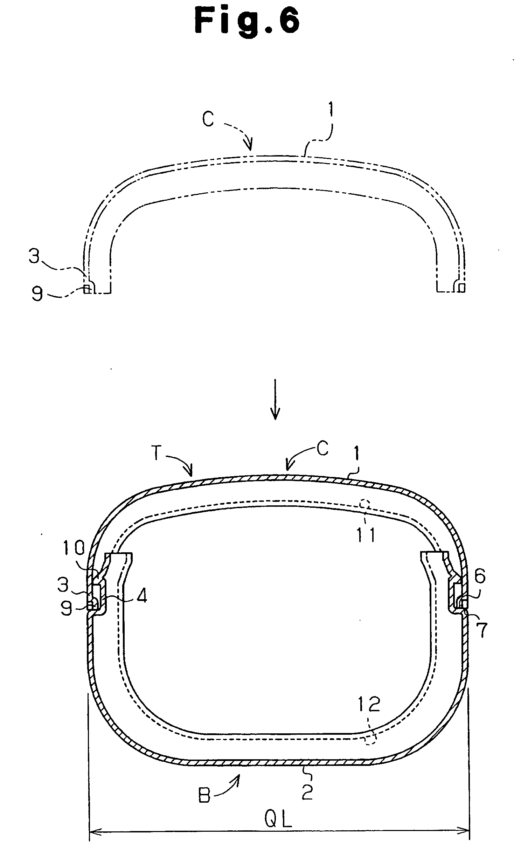

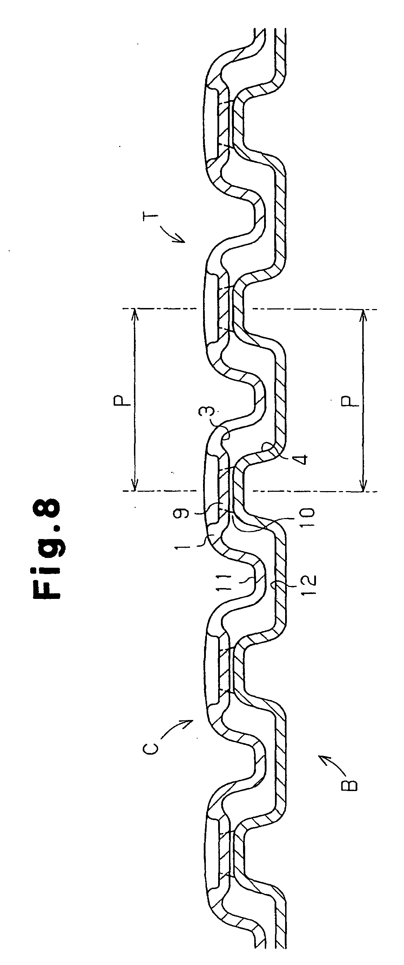

As shown in Figure 6 and Figure 8, the fitting portion 3 of the convex portion 1 of the cover C, and the fitted portion 4 which continues to the convex portion 2 of the base B are positioned along the longitudinal direction S to approximately correspond to each other, and the cover C is pressed to the base B from above the base B. In order that the fitted portion 4 is fitted into the inner side of the fitting portion 3 in the width direction of the housing member T, the sectional shapes of them are formed to be approximately similar to each other. A concave portion 12 of the base B is disposed inside from a concave portion 11 of the cover C in the width direction of the housing member T. Therefore, the cover C can cover the outer side of the base B over the entire length of the housing member T in the longitudinal direction S.

The width W₁ of the convex portion 1 of the cover C is larger than the width W₂ of the convex portion 2 of the base B. Therefore, in the state in which the cover C covers the base B, and the fitting portion 3 of the cover C is fitted on the outer side of the fitted portion 4 of the base B, the cover C is movable in the longitudinal direction of the housing member T with respect to the base B within a fixed range. Therefore, in the state in which the cover C covers the base B, the cover C can reliably cover the base B even if the fitting portion 3 of the cover C is displaced along the longitudinal direction S with respect to the fitted portion 4 of the base B.

As shown in Figure 7, when the base B is covered with the cover C, the locking projection 9 and the locked projection 10 interfere with each other. When the fitting portion 3 of the cover C is fitted onto the fitted portion 4 of the base B, an inclined plane portion 10a of the locked projection 10 guides the locking projection 9, and thereby the interference of the locking projection 9 and the locked projection 10 can be relieved. Further, the fitting portion 3 is elastically deformed slightly outward, and thereby the cover C can be smoothly fitted onto the base B. After the locking projection 9 and the locked projection 10 are once locked, a horizontal plane portion 10b of the locked projection 10 and a step portion 18 of the locking projection 9 interfere with each other. Therefore, the cover C is locked at the base B, and the cover C is difficult to detach from the base B. The fitted portion 4 of the base B is connected to an abutting step portion 6 which continues to the convex portion 2 of the base B. An end surface 7 of the fitting portion 3 abuts the abutting step portion 6, and thereby the state in which the cover C covers the base B becomes stable. In addition, the convex portion 2 of the base B and the convex portion 1 of the cover C have approximately the same width dimension QL (see Figure 6), and therefore the entire width of the housing member T is approximately the same. A projected portion does not exist in the part where the convex portion 1 of the cover C and the convex portion 2 of the base B engage with each other, and therefore the housing member T can be easily handled.

As described above, the housing member T constituted of the cover C and the base B are formed in a corrugated plate shape having projections and depressions along its longitudinal direction S. As a result, strength against bending force in the width direction and twisting force becomes larger than the case in which the housing member is molded into a flat plate shape, and therefore the housing member T can be prevented from curving. Accordingly, when the housing member T housing the cable K is used outdoors, the housing member T has high strength against heat deformation from solar heat even without increasing the wall thickness, and is light in weight. Therefore, when the housing member T is used in the state of long length, handling of it is easy.

In the conventional housing member made of concrete or metal, the cover is heavy, and even if the outer force is applied to the cover, the cover is not easily displaced with respect to the base. However, when a man rides on or steps on the housing member or the housing member is buried in the earth, and an outer force is applied to the housing member, in the light housing member made of a resin, there is the possibility that the cover will be displaced in the longitudinal direction with respect to the base and the cable which is housed will be exposed. Further, in the case of the housing member molded into a flat plate shape by extrusion molding, a displacement of the cover and the base in the longitudinal direction can be prevented by only the frictional force thereof. Therefore, when the housing member is placed along the vertical direction, or when the housing member is placed to be inclined relative to the vertical direction, the cover is displaced with respect to the base by the tare weight of the cover. Further, when the extrusion-molded housing member made of a resin is disposed outdoors, the cover of the housing member is deformed by solar heat, and the cover expands outward. Therefore, in the case of the housing member in the flat plate shape, the fitting of the cover to the base is released.

In contrast to the above, in the housing member T of this embodiment, the convex portion 1 of the cover C is fitted on the convex portion 2 of the base B so as to be overlaid on the convex portion 2 of the base B, and therefore a displacement of the cover C with respect to the base B along the aforesaid longitudinal direction S can be restrained. Even if the cover C is expanded more or less due to thermal deformation, the fitted state of the convex portion 1 of the cover C and the convex portion 2 of the base B is kept, and a displacement between the base B and the cover C does not occur. Therefore, the cable K can be reliably protected.

The fitting portion 3 of the convex portion 1 of the cover C is fitted onto the outer side of the fitted portion 4 of the convex portion 2 of the base B. Therefore, the fitting portion 3 functions as "an umbrella" for the housing member T, and can prevent rainwater and dust from entering from above into the housing member T. Further, the width W₁ of the convex portion 1 of the cover C is larger than the width W₂ of the convex portion 2 of the base B (see Figure 5). Therefore, even if the cover C slightly displaces along the longitudinal direction S of the housing member T with respect to the base B, rainwater and dust can be prevented from entering from above into the housing member T.

As the elongate material which is housed in the housing member T, it is not limited to a wire material such as optical cable and electric wire, and various kinds of pipes may be housed therein.

In the above-described embodiment, the pitches P of the convex portions 2 of the base B and the convex portions 1 of the cover C are the same, but the pitch of the convex portions 2 of the base B may be twice as long as the pitch of the convex portions 1 of the cover C, for example, and a difference may exist between the number of convex portions 2 of the base B and the number of convex portions 1 of the cover C in a fixed length. Specifically, it is suitable if only there is the relationship of an integral multiple between the pitch of the convex portions 1 of the cover C and the pitch of the convex portion 2 of the base B. In this case, the fitting portion 3 of the cover C can also be fitted onto the outer side of the fitted portion 4 of the base B.

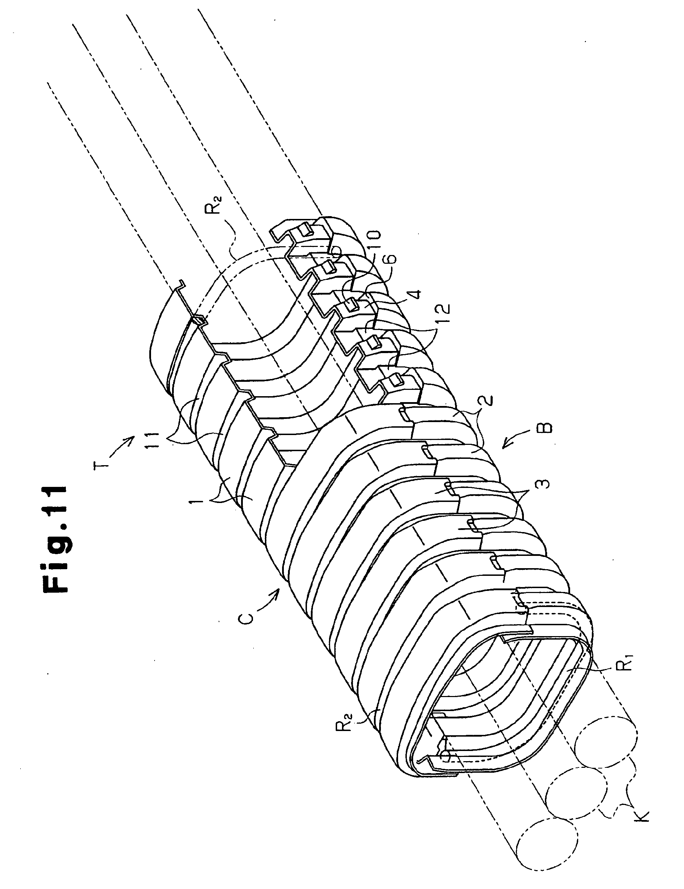

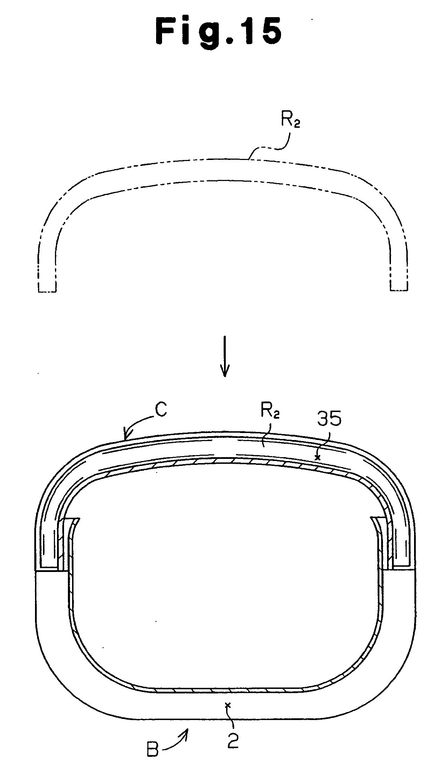

Next, a second embodiment of the present invention will be explained based on Figure 11 to Figure 16. In this embodiment, first and second reinforcement tools R₁ and R₂ are included in the housing member T in the embodiment shown in Figure 1 to Figure 10. The same reference numerals and characters are given to the same components as those in the embodiment in Figure 1 to Figure 10, and the explanation thereof will be omitted.

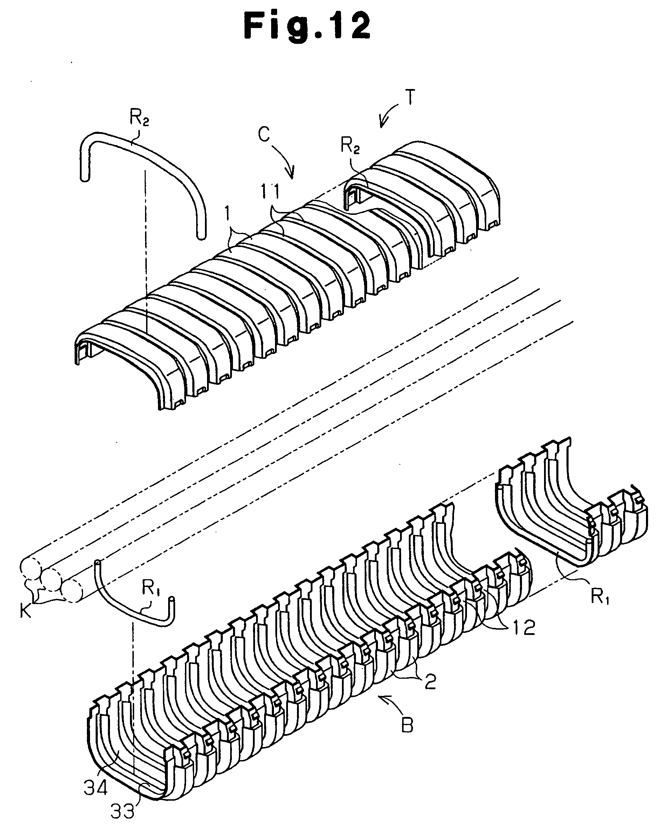

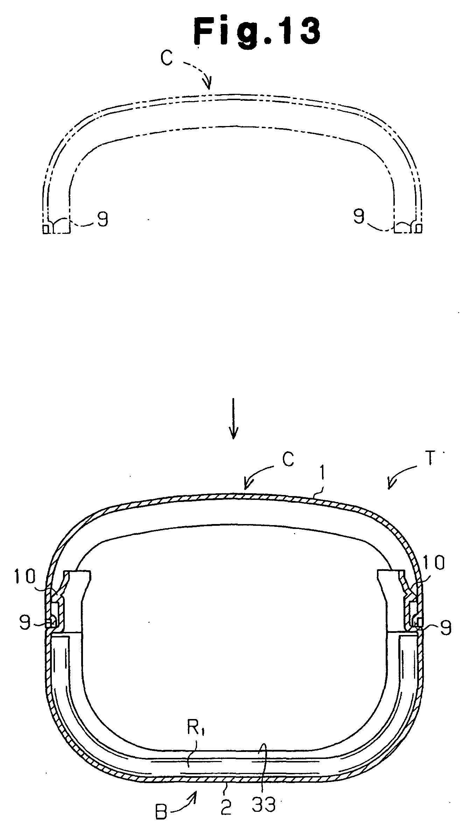

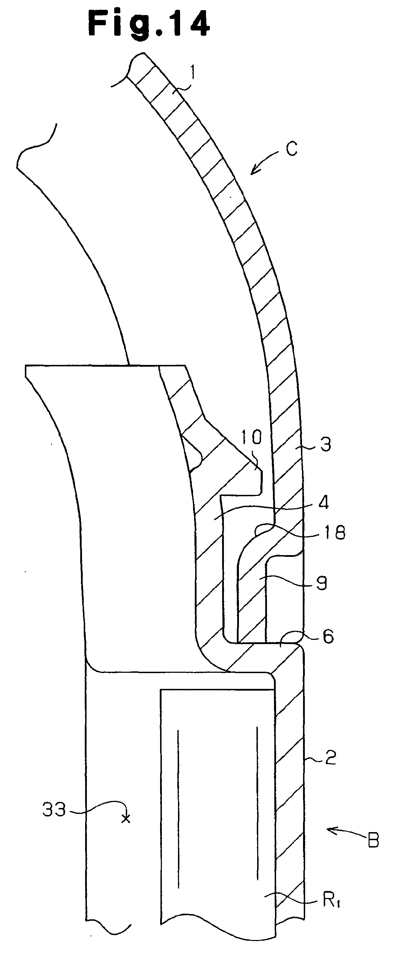

As shown in Figure 11 and Figure 12, the first reinforcement tools R₁ are inserted in concave portions 33, which are each formed in an inner side of the convex portion 2 of the base B, at predetermined intervals along the longitudinal direction S of the base B. Each of the reinforcement tools R₁ forms an approximately U-shape corresponding to the sectional shape of the base B. As shown in Figure 13 and Figure 14, the first reinforcement tool R₁ is inserted into the concave portion 33 so that predetermined spaces are formed between both end portions (upper end portions of upright portions in the usage state) of the first reinforcement tool R₁ and surfaces of plate portions constructing the abutting step portions 6 corresponding to both the end portions. Meanwhile, as shown in Figure 11 and Figure 12, the second reinforcement tools R₂ are inserted in concave portions 11 of the cover C at predetermined intervals along the longitudinal direction S of the cover C. Each of the second reinforcement tools R₂ forms an approximately U-shape corresponding to the sectional shape of the cover C. Both ends (lower ends of the upright portions in the usage state) of each of the second reinforcement tools R₂ do not project from the lower end surface of the aforesaid cover C in the state in which the second reinforcement tool R₂ is inserted in the concave portion 11 of the cover C (see Figure 5).

In the state in which the cover C covers the base B, the width by height of the housing member T is about 200 x 150 mm. The housing member T is used in lengths of 4 to 5 m. Each of the reinforcement tools R1 and R2 is inserted into the corresponding spot at a pitch of 0.5 to 1 m. It is preferable that both the reinforcement tools R₁ and R₂ be made of stainless steel or the like having corrosion resistance in consideration that the housing member T is laid outdoors and both of them are inserted into the corresponding spots by slightly elastically deformed. Specifically, the first reinforcement tool R₁ is held in a state in which it is slightly opened in the unused state. The second reinforcement tool R₂ is held in the state in which it is slightly contracted in the unused state. In the state in which the first reinforcement tool R₁ is inserted in the concave portion 33 of the base B, the first reinforcement tool R₁ is in close contact with the inner surface of the base B as a result that the upright portions of the first reinforcement tool R₁ are elastically deformed. Meanwhile, in the state in which the second reinforcement tool R₂ is inserted in the concave portion 11 of the cover C, the second reinforcement tool R₂ is in close contact with the outer surface of the cover C as a result that the upright portions of the second reinforcement tool R₂ is elastically deformed. As a result, the reinforcement tools R₁ and R₂ are difficult to detach from the corresponding base B and cover C.

The base B is laid out in the state in which the first reinforcement tools R₁ are inserted in the concave portions 33 of the base B, and the cable K is housed inside the base B. Thereafter, when the cover C covers the base B in which the cable K is housed, the fitting portions 3 of the cover C or the fitted portions 4 of the base B are slightly elastically deformed, and the fitting portions 3 of the cover C are fitted onto the outer sides of the fitted portions 4. Further, the locking projections 9 of the cover C are locked at the locked projections 10 of the base B, and thus the cover C is difficult to detach from the base B. As shown in Figure 14, in the state in which the cover C covers the base B, the lower end surface of the cover C abuts the abutting step portions 6 of the base B.

When the housing member T is laid out outdoors and used, expansion of the cover C due to solar heat or the like is prevented by the second reinforcement tools R₂ which are inserted in the concave portions 11 of the cover C. Since the cover C is fitted onto the outer side of the base B, the expansion of the base B is also prevented at the same time. When the housing member T is buried in the ground, in the case in which the pressing force from the earth acts on both side portions of the base B, the first reinforcement tools R₁ inserted in the concave portions 33 inside the base B prevents the inward deformation of the base B. As a result, the strength of the base B is enhanced. In this manner, the strength of the base B and the cover C is enhanced by the reinforcement tools R₁ and R₂ respectively inserted and held in the concave portions 33 and 11 of the base B and the cover C, and in combination with the concavo-convex structure along the longitudinal direction S of the base B and the cover C, the strength of the housing member T is further enhanced.

In this embodiment, the second reinforcement tools R₂ are inserted into the concave portions 11 at the outer side of the cover C, and the first reinforcement tools R₁ are inserted into the concave portions 33 inside the base B, but the corresponding reinforcement tools R₁ or R₂ may be inserted into either one of the base B or the cover C, corresponding to the installation state of the housing member T.

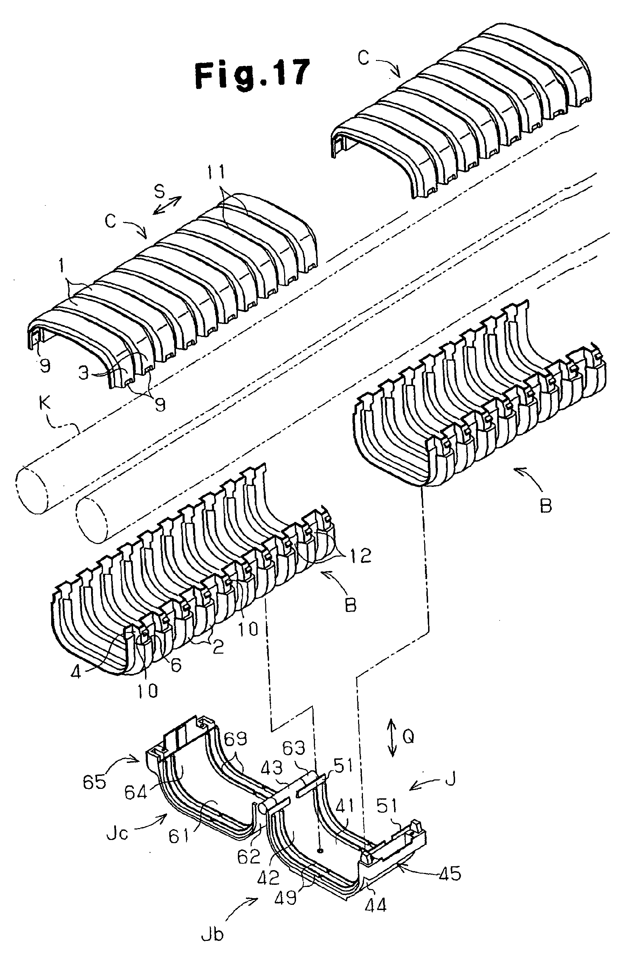

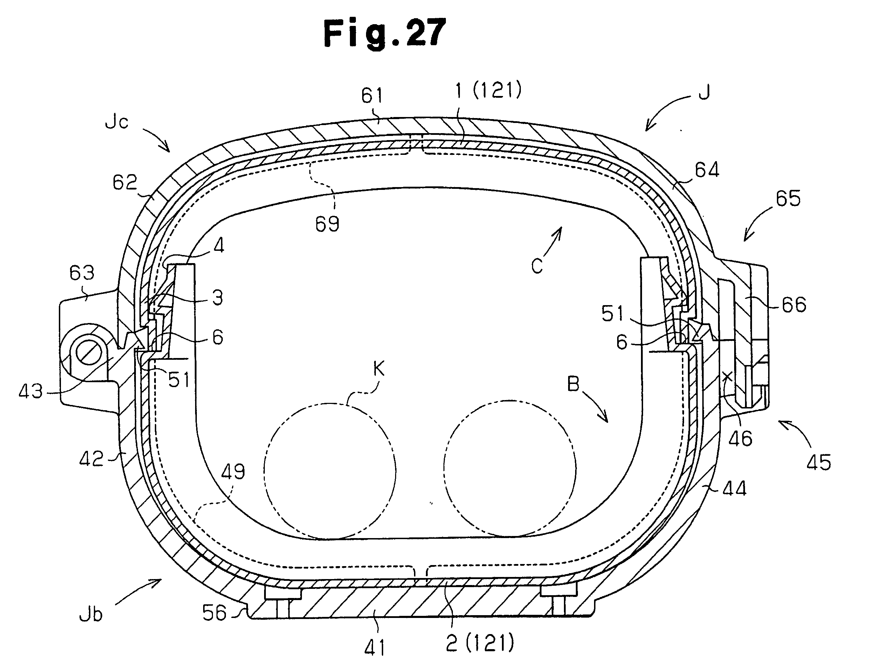

Next, a third embodiment of the present invention will be explained based on Figure 17 to Figure 27. The housing member T of this embodiment is the same as the housing member T explained in the embodiment explained in Figure 1 to Figure 10, and the explanation thereof will be omitted.

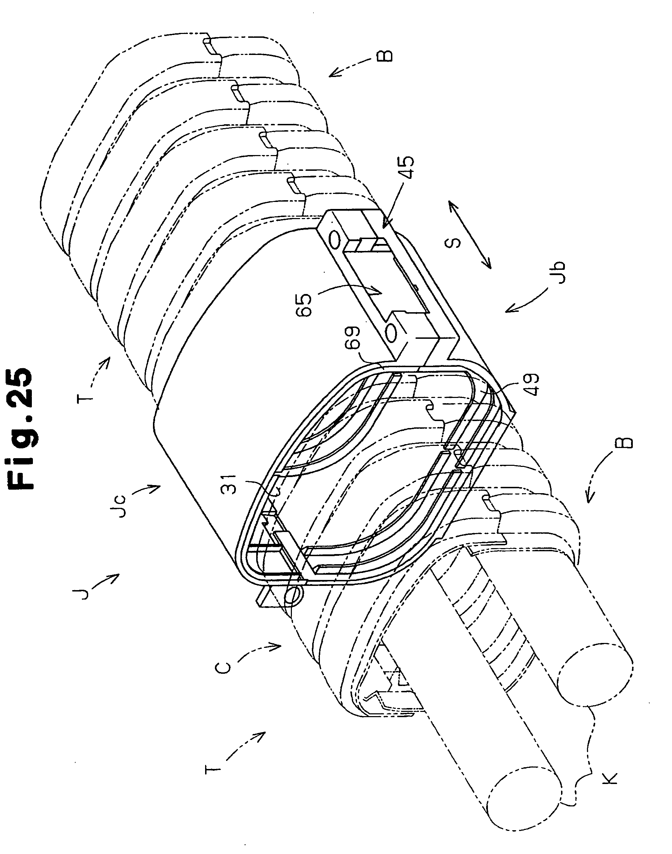

As shown in Figure 17 and Figure 25, a connecting tool J made of a resin and connects two of the housing members T in a connecting direction (lay-out path) S. The connecting tool J has an approximately similar shape to the sectional shape of the housing member T when the opening of the housing member T is seen from the front, and includes a connecting cover body Jc and a connecting base body Jb each forming a semi-cylindrical shape. The connecting cover body Jc and the connecting base body Jb are assembled along a vertical direction Q. As shown in Figure 25, the end portions of the corresponding housing members T are overlaid and held in each of the connecting ports 31 of the connecting tool J, whereby the two housing members T are connected. In this embodiment, concerning the illustration of the housing members T, only connected portions at both the ends of the housing members T are shown instead of the entire bodies of long lengths.

As shown in Figure 17, Figure 18 and Figure 24, on the outer side of an upper end portion of a first wall portion 62 which continues to a body portion 61 of the connecting cover body Jc forming an approximately U-shape in section, two first connecting portions 63 are integrally provided at both end portions in the longitudinal direction S of the housing member T. On the other hand, on outer side of an upper end portion of a second wall portion 64 which continues to the body portion 61 of the connecting cover body Jc, an engaging portion 65 is formed integrally with the connecting cover body Jc.

On an outer side of an upper end portion of a first wall portion 42 which continues to a body portion 41 of the connecting base body Jb forming an approximate U-shape in section, a second connecting portion 43 for connecting to the first connecting portion 63 of the connecting cover body Jc is integrally provided at a central portion in the longitudinal direction S of the housing member T. On the other hand, on an outer side of an upper end portion of a second wall portion 44 which continues to the body portion 41 of the connecting base body Jb, an engaged portion 45 for engaging with the engaging portion 65 of the aforesaid connecting cover body Jc is formed integrally with the connecting base body Jb.

A first through-hole 63a for allowing insertion of a hinge pin 81 is formed in each of the first connecting portions 63 of the connecting cover body Jc. Meanwhile, a second through-hole 43a that allows the insertion of the hinge pin 81 which penetrates through the aforesaid first through-hole 63a is formed in the second connecting portion 43 of the connecting base body Jb.

The second connecting portion 43 is sandwiched by a pair of first connecting portions 63 from both sides, and the corresponding hinge pin 81 is inserted from the outside of each of the first connecting portions 63 to the inside, whereby the connecting base body Jb and the connecting cover body Jc are connected. A restraining piece 63b of the first connecting portion 63 restrains the rotation of the connecting cover body Jc with respect to the connecting base body Jb.

The connecting cover body Jc rotates around the hinge pins 81. The connecting tool J, which is formed by closing an open portion of the connecting base body Jb by the connecting cover body Jc, forms a cylindrical shape. The entire length of the connecting cover body Jc (or the connecting base body Jb) along the longitudinal direction S of the housing member T is about four times as long as the pitch P of the convex portion 1 of the cover C (or the convex portion 2 of the base B) of the housing member T.

An engaged groove 46 extending along the longitudinal direction S and the vertical direction Q of the housing member T is formed in a central portion of the engaged portion 45 of the connecting base body Jb. A pair of fitting claw pieces 48 is provided at both end portions of the engaged portion 45. A lower hole 47 for screwing a self-tapping screw not shown therein is formed between each of the end portions of the engaged groove 46 and the corresponding fitting claw piece 48. Each of the lower holes 47 extends along the vertical direction Q.

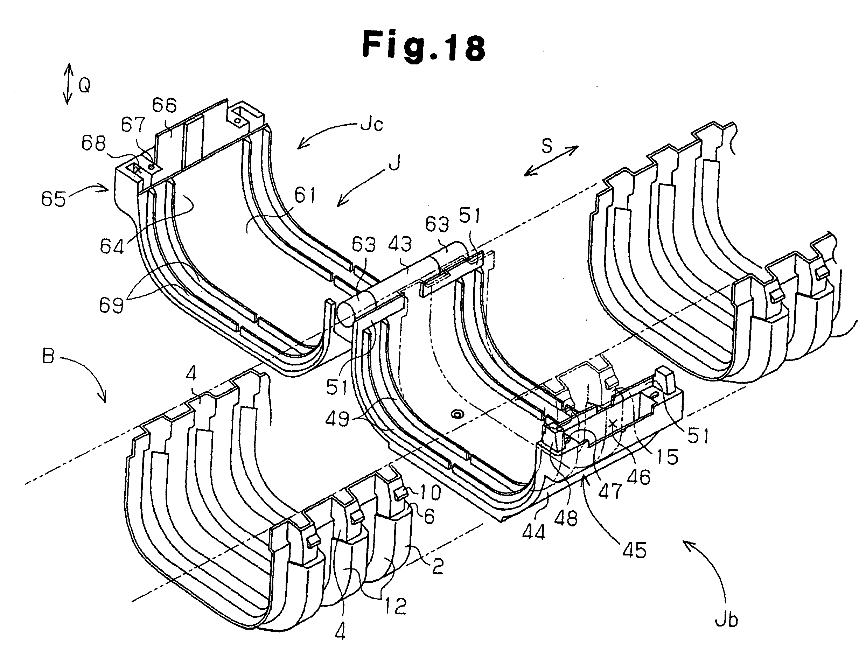

In a central portion of the engaging portion 65 of the connecting cover body Jc, a tongue-shaped locking piece 66 is provided at a position corresponding to the engaged groove 46 of the engaged portion 45. A tap screw hole 67 corresponding to the lower hole 47 of the engaged portion 45 is formed in each end portion 90 of the engaging portion 65. The tap screws, not shown, are inserted into the tap screw holes 67. A fitting groove 68 extending along the vertical direction Q is formed in each of the end portions 90 of the engaging portion 65, as shown in Figure 18. Each of the fitting claw pieces 48 of the engaged portion 45 is fitted into the corresponding fitting groove 68 of the engaging portion 65. The tongue-shaped locking piece 66 engages in the engaged groove 46, and the fitting claw pieces 48 engage in the corresponding fitting grooves 68, whereby the assembled state of the connecting base body Jb and the connecting cover body Jc is kept. As necessary, the aforesaid tap screws are inserted into the tap screw holes 67, and the tap screws are screwed into the lower holes 47. This strengthens the above-described assembly state. The fitting claw pieces 48 are fitted into the fitting grooves 68, and thereby the aforesaid assembled state is made stable.

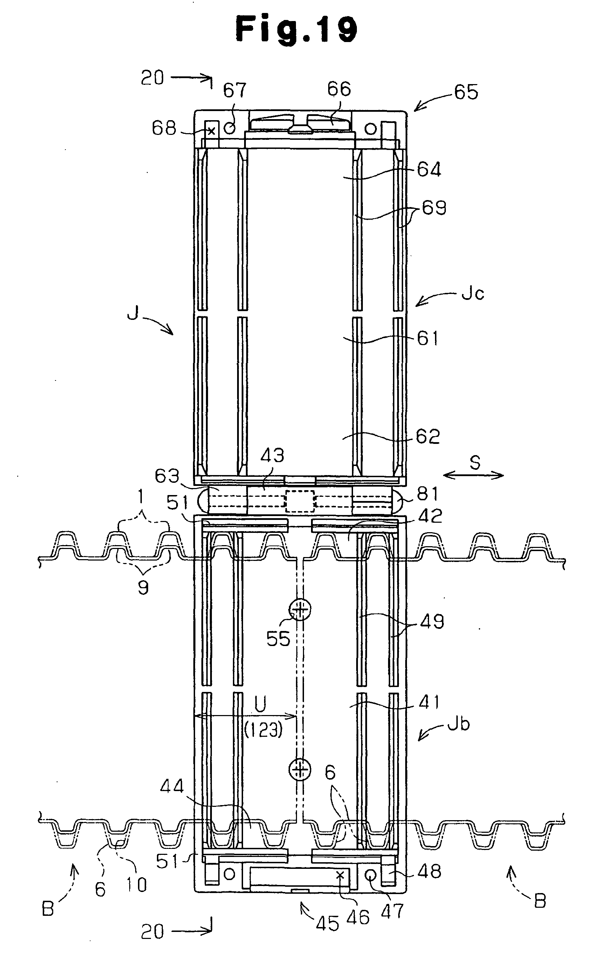

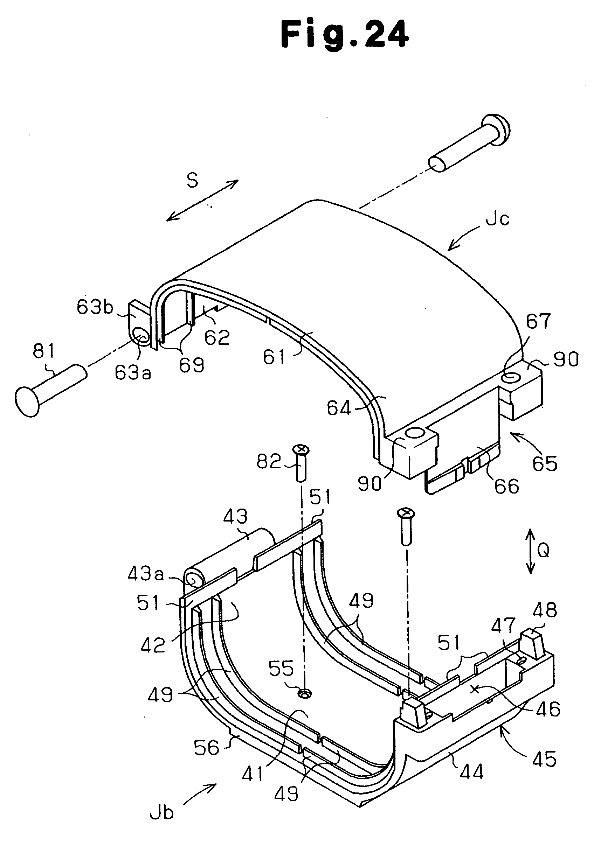

As shown in Figure 19 and Figure 24, in an inner peripheral surface near both end portions of the main body portion 41 of the connecting base body Jb in the longitudinal direction S of the housing member T, two pairs of first locking convex lines 49 are provided, two of which make one pair, and which extend along the inner peripheral surface. Similarly, two pairs of second locking convex lines 69 which extend along an inner peripheral surface are provided near both end portions of the main body portion 61 of the connecting cover body Jc in the longitudinal direction S of the housing member T. As shown in Figure 24, each of the locking convex lines 49 and 69 forms an approximately triangular shape in section and has a notched portion at a central portion along its own longitudinal direction. The adjacent first locking convex lines 49 in the nearest position are provided on the body portion 41 of the base B with a space corresponding to the width W₂ (see Figure 5) of the convex portion 2 of the base B therebetween. Similarly, the adjacent second locking convex lines 69 at the nearest position are provided on the body portion 61 of the connecting cover body Jc with a space corresponding to the width W₁ (see Figure 5) of the convex portion 1 of the cover C therebetween.

When the base B and the cover C are assembled, annular convex lines 121 are formed by the convex portions 1 of the cover C and the corresponding convex portions 2 of the cover B.

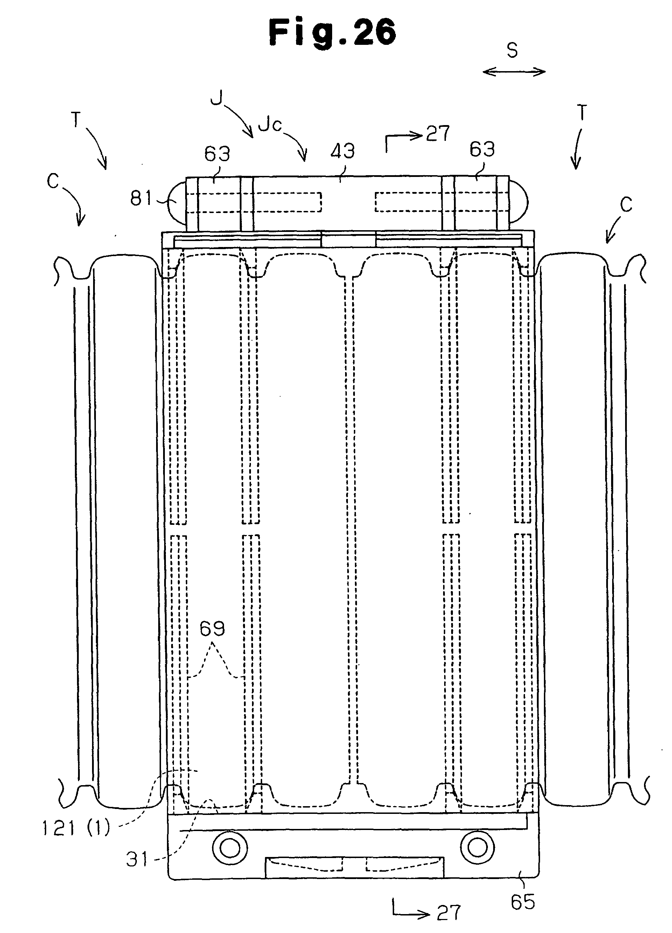

In the state in which the connecting cover body Jc is assembled to the connecting base body Jb, the respective locking convex lines 49 and 69 hold both side surfaces of the convex lines 121 at the end portions of the housing member T. (See Figure 26). Accordingly, both the side surfaces of the convex line 121 of the housing member T is locked by the respective locking convex lines 49 and 69, and the housing member T is prevented from slipping outside from the connecting tool J.

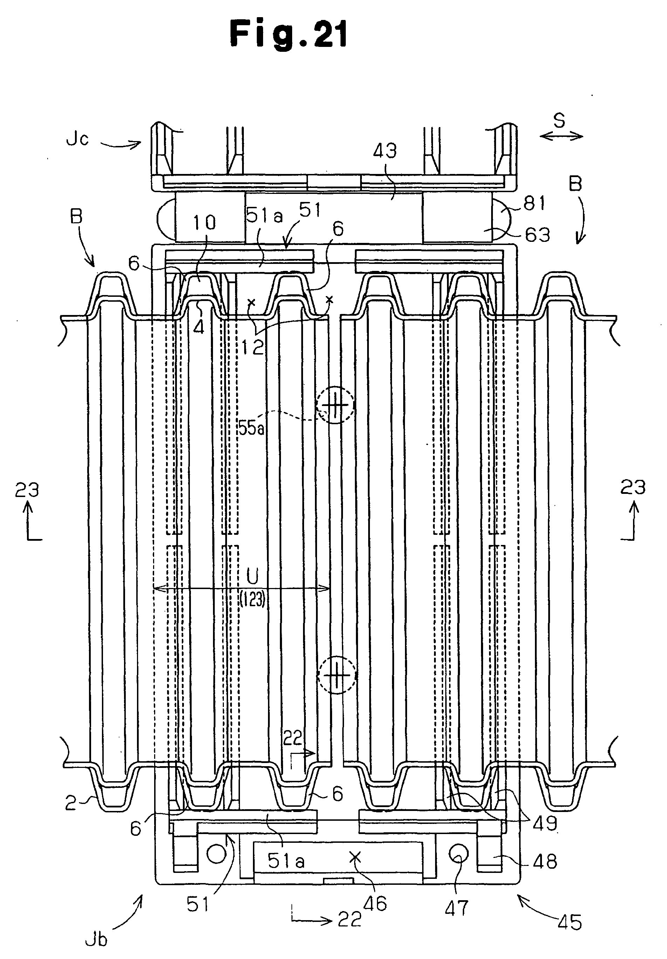

As shown in Figure 21, two pairs of displacement preventing convex lines 51 project toward the wall portions 44 and 42 to which they are each respectively opposed, are provided at the upper end portions of both the wall portions 42 and 44 of the body portion 41 of the connecting base body Jb. Each of the displacement preventing convex lines 51 extend along the longitudinal direction S of the housing member T. Two of the displacement preventing convex lines 51 are disposed so that the distance between the adjacent displacement preventing convex lines 51 provided at the upper end portion of the first wall portion 42 has a predetermined space. Similarly, two of the displacement preventing convex lines 51 are disposed so that the distance between the adjacent displacement preventing convex lines 51 provided at the upper end portion of the second wall portion 44 has a predetermined space. In the direction along the aforesaid longitudinal direction S, the entire length of a pair of displacement preventing convex lines 51 opposed to each other corresponds to about the width dimension of the two continuing convex portions 2 of the base B of the housing member T. The displacement preventing convex line 51 engages with the abutting step portion 6 of the convex portion 2 of the corresponding base B, and prevents the base B of the housing member T from rising from the connecting base body Jb.

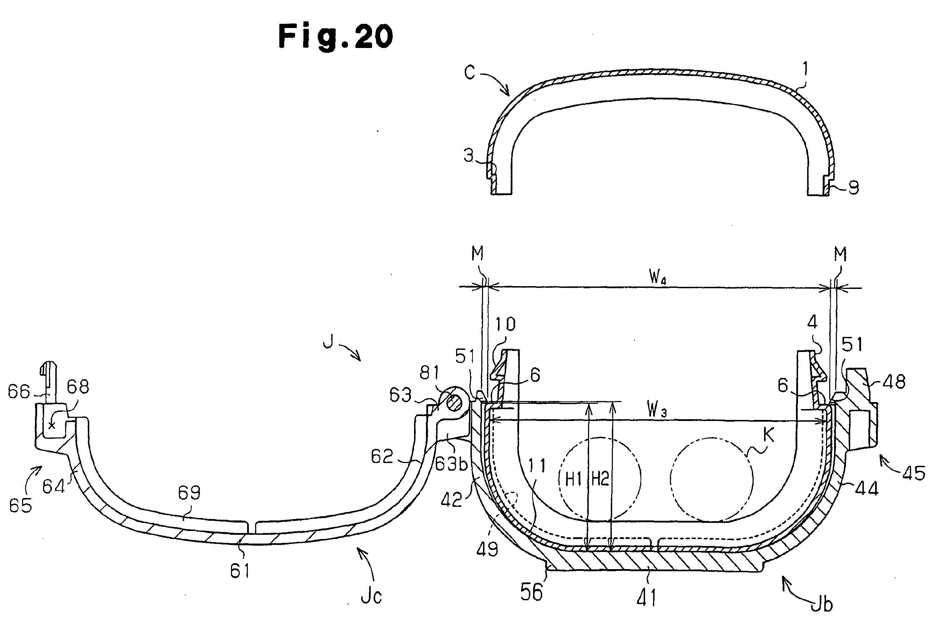

The base B is cut at the position of the concave portion 12 of the base B. The end surface of each of the cut bases B is disposed at the approximately central portion of the connecting base body Jb in the aforesaid longitudinal direction S. As described above, each of the displacement preventing convex lines 51 engages with the corresponding abutting step portion 6 provided at the convex portion 2 of the aforesaid base B (See Figure 19 and Figure 20). Accordingly, the displacement preventing convex line 51 does not have to be formed between the adjacent displacement preventing convex lines 51 in the longitudinal direction S of the housing member T. Therefore, the resin material at the time of injection molding of the connecting base body Jb can be saved. For example, even if the displacement preventing convex lines 51 are formed continuously along the longitudinal direction S, the aforesaid rise is prevented.

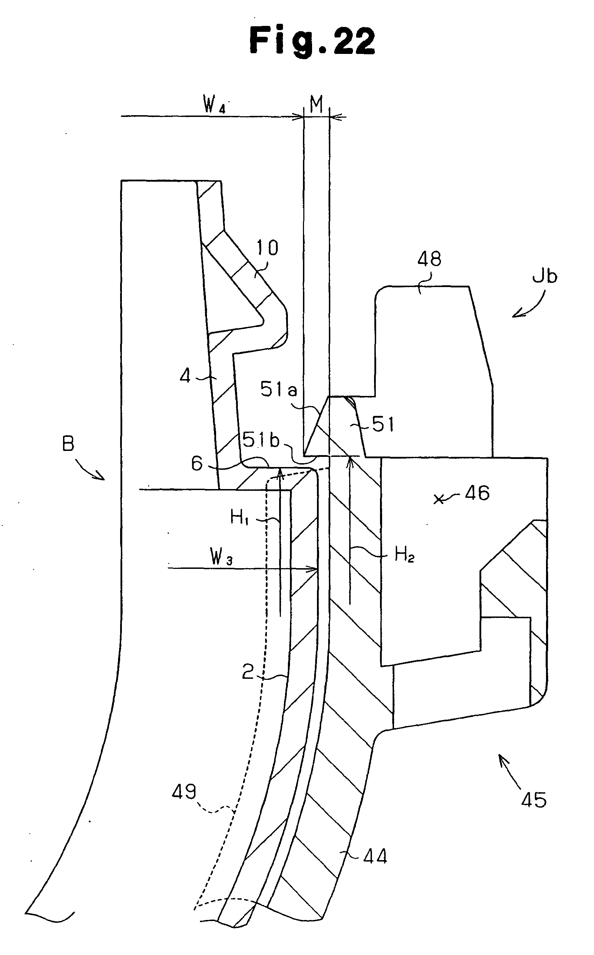

As shown in Figure 22, the sectional shape of the displacement preventing convex line 51 forms an approximately trapezoidal shape. Each of the displacement preventing convex lines 51 has an inclined plane 51a. In the width direction of the connecting base body Jb, the inclined plane 51a inclines so that the space between both the opposing inclined planes 51a becomes narrower toward the lower portion of the connecting base body Jb. Each of the displacement preventing convex lines 51 has an abutting surface 51b which forms an approximate right angle with the inner surface of each of the aforesaid wall portions 42 and 44. Each of the abutting surfaces 51b is formed to project by a dimension M to the inside from the inner surface of each of the corresponding wall portions 42 and 44. The narrowest inner width W₄ (see Figure 20 and Figure 22) between a pair of displacement preventing convex lines 51, which are opposed to each other, (between a pair of abutting surfaces 51b corresponding to the lower end surfaces of the trapezoids), is slightly smaller than the outer width W₃ of the convex portion 2 of the base B. A height H₂ from the inner surface of the bottom wall of the body portion 41 of the connecting base body Jb up to the abutting surface 51b of the displacement preventing convex line 51 is slightly larger than a height H₁ from the inner surface of the bottom wall of the main body portion 41 of the connecting base body Jb up to the abutting step portion 6 of the base B.

As shown in Figure 19 and Figure 24, a pair of screw insertion holes 55 are formed at an approximately central portion of the body portion 41 of the connecting base body Jb. The connecting tool J is not limited to the case in which it is used by being directly placed on the ground with earth and sand or the like, but it is sometimes placed on a mounting table made of a resin or wood. In the latter case, the connecting base body Jb is fixed to the aforesaid mounting table via a screw 82 inserted through the screw insertion hole 55. An approximately square seating portion 56 which slightly projects to the outside (towards the ground mounted side or the like) is formed at a bottom portion of the body portion 41 of the connecting base body Jb (see Figure 20 and Figure 24). The seating portion 56 is formed to make seating favorable when the connecting base body Jb is placed on the ground or the like. The seating portion 56 facilitates the lay-out operation of the connecting tool J.

In order to lay a plurality of housing members T along a predetermined path on the ground having bumps and dips, the end portions of the bases B of two of the housing members T are connected with the connecting tool J. The connecting base body Jb and the connecting cover body Jc are connected via the hinge pin 81 in advance, and are opened at approximately 180° (see Figure 20). The open state of the connecting cover body Jc is maintained by the restraining pieces 63b provided at both the end portions of the first connecting portion 63 of the cover C.

Next, the connecting tool J in the opened state is placed on the ground or the like, and subsequently, the base B is pressed above the connecting base body Jb to overlay one end portion of the base B on the one end portion of the connecting base body Jb. This operation is desirably performed while positioning the end portion of the base B to be connected with respect to the connecting base body Jb along the longitudinal direction S of the housing member T. The dimension of the outer width W₂ of the convex portion 2 of the base B is larger than the inner width W₃ of a pair of displacement preventing convex lines 51 opposed to each other, and therefore the convex portion 2 of the base B interferes with the corresponding displacement preventing convex line 51 in the middle of the pressing of the base B. At this time, interference of the convex portion 2 of the base B and the displacement preventing convex line 51 is relieved by the inclined plane 51a of the displacement preventing convex line 51. Further, when the base B is pressed against the connecting base body Jb, both the wall portions 42 and 44 of the connecting base body Jb are elastically deformed slightly outward. Accordingly, there is no hindrance in the operation of pressing the base B against the connecting base body Jb and overlaying both of them on each other.

As shown in Figure 18 to Figure 20, the sectional shape of the convex portion 2 is approximately similar to the sectional shape of the body portion 41, and is formed to be a little compact so that the convex portion 2 of the base B is disposed on the inner surface of the body portion 41 of the connecting base body Jb. In the state in which the base B is mounted on the connecting base body Jb, the abutting step portion 6 of the convex portion 2 is disposed at a lower position in the vertical direction Q than the displacement preventing convex line 51 of the connecting base body Jb (H₁<H₂). Therefore, the base B is overlaid on the connecting base body Jb in the state in which the aforesaid abutting step portion 6 is disposed along the longitudinal direction S, at the lower side of the abutting surface 51b of the displacement preventing convex line 51. Further, the base B can be overlaid on the connecting base body Jb in the state in which the outer surface of the convex portion 2 of the base B is held between the aforesaid pair of the first locking convex lines 49 which are formed on the inner surface of the end portion of the body portion 41 of the connecting base body Jb.

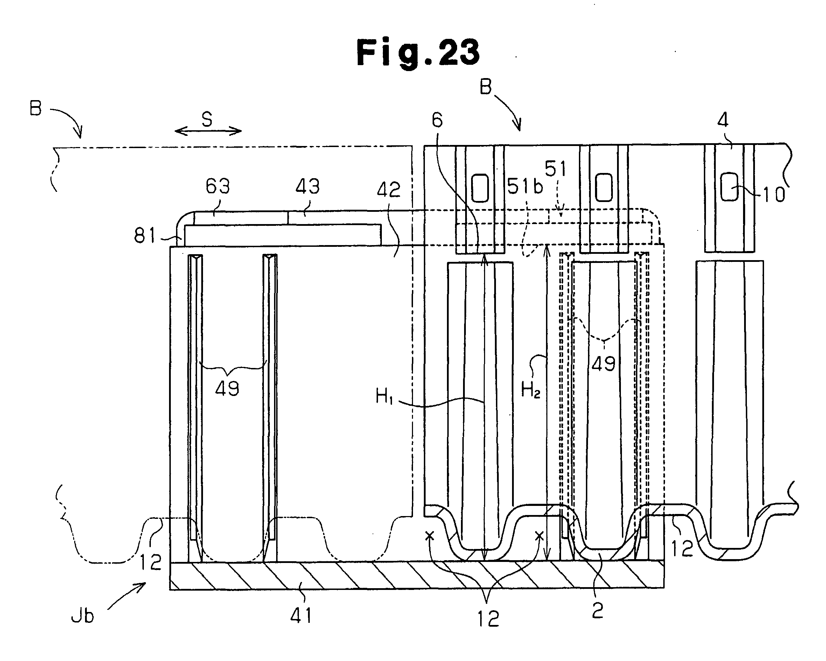

When two of the bases B are mounted on the connecting tool J, each of the pairs of locking convex lines 49 hold the second convex portion 2 from the end surface of the corresponding base B (see Figure 23). Accordingly, at the connecting section where two of the bases B are connected to the connecting base body Jb, a portion from the end surface thereof up to the second concave portion 12 of each of the bases B, that is, the end portion of the base B corresponding to the dimension U is overlaid on the body portion 41 of the connecting base body Jb (see Figure 19, Figure 21 and Figure 23). The displacement preventing convex lines 51 are formed on approximately all the parts of both upper end portions of the connecting base body Jb, in other words, at least the portions of the connecting base body Jb, which correspond to the abutting step portions 6 of the convex portions 2 of the bases B.

When the two bases B are mounted on the connecting base body Jb, each of the bases B is pressed against the connecting base body Jb from above the connecting base body Jb by estimating that the end surface of each of the bases B is positioned at the portion which is a little shorter than the length from the end surface of the connecting base body Jb to the middle position of the body portion 41 in the longitudinal direction S. Then, in the state in which two of the convex portions 2 of the bases B from the end surfaces of the bases B are held in the pairs of the first locking convex lines 49, the abutting step portions 6 of the bases B are disposed at the lower sides of the abutting surfaces 51b of the displacement preventing convex lines 51. As a result, the two bases B are connected in the states in which the connecting base body Jb and the two bases B are overlaid. At the above-described time of operation, the displacement preventing convex lines 51 are provided at the upper end portions of both the wall portions 42 and 44 of the connecting base body Jb, and therefore the operator can reliably visually recognize the suitability of the placement state of the displacement preventing convex lines 51 and the abutting step portions 6 from above. The operation of overlaying the connecting base body Jb and the bases B on each other and connecting them by engaging the displacement preventing convex lines 51 and the abutting step portions 6 and engaging the convex portions 2 of the bases B and the first locking convex lines 49 in this manner is easy, and the bases B can be reliably connected to the connecting base body Jb.

The outer width W₃ of the convex portion 2 of the base B is smaller than the inner width (W₄+2M) between both the wall portions 42 and 44 of the connecting base body Jb, and is larger than the total (M+W₄) of the inner width W₄ between the aforesaid pair of displacement preventing convex lines 51 and the projection length M of the displacement preventing convex line 51 (W₄+2M>W₃>W₄+M). Accordingly, after the base B is connected to the connecting base body Jb, even if the convex portion 2 of the base B is slightly displaced from the reference position with respect to the body portion 41, within the range of the clearance between the inner surface of the body portion 41 of the connecting base body Jb and the outer surface of the convex portion 2 of the base B, the abutting step portions 6 of the base B abut the abutting surfaces 51b of the displacement preventing convex lines 51 of the connecting base body Jb. Therefore, the base B does not displace upward from the connecting base body Jb to such an extent as to impair the connection state (see Figure 20 and Figure 22). Even if the outer force which causes the displacement along the vertical direction Q is applied to the connecting base body Jb, for example, the base B is prevented from rising with respect to the connecting base body Jb as described above, and therefore the connection state of both of them is stabilized.

Even when the outer force is applied to the connecting base body Jb and the base B to remove them from the connecting base body Jb along the longitudinal direction S of the housing member T, the convex portion 2 of the base B is held by the first locking convex lines 49 of the connecting base body Jb. Therefore, the base B does not slip off from the connecting base body Jb along the aforesaid longitudinal direction S (see Figure 21). In this way, slipping off of the base B along the longitudinal direction S is also prevented in addition to the rise of the base B with respect to the connecting base body Jb, and therefore the connection state of the base B and the connecting base body Jb is very stable, thus facilitating the next connecting operation.

Next, the connecting base bodies Jb of a plurality of connecting tools J are placed along the aforesaid longitudinal direction (lay-out path) S, and the operation of overlaying the bases B of a plurality of housing members T one after another is carried out. The number of the overlaid portions of the bases B and the connecting base bodies Jb increases as the number of connections of the bases B and the connecting base bodies Jb increases. After connecting the connecting base bodies Jb and the bases B is finished, the operation of housing the cable K is performed from the end portion of the row of the connected bases B in sequence. Since the surface on which the bases B and the connecting base bodies Jb are laid is the ground having bumps and dips, in each of the overlaid portions of the bases B and the connecting base bodies Jb, the impact at the time of housing the cable K and the weight of the cable K work significantly, and the force along the vertical direction Q sometimes works. The base B and the connecting base body Jb both correspond to approximately straight semi-cylindrical shapes, and have strength such that they are not deformed due to the weight of the cable K. Therefore, in each of the overlaid portions, the force of the base B to rise from the connecting base body Jb is sufficient, and the force is transmitted one after another to the other adjacent overlaid portions in which the cable K is not yet housed . In addition, the base B is a part of the thin, light and long housing member T made by blow molding, and therefore the force to rise becomes further larger.

However, the connecting base body Jb and the base B are respectively provided with the displacement preventing convex lines 51 and the abutting step portions 6 as the displacement preventing means, and therefore rise of the base B with respect to the connecting base body Jb is prevented. Further, since the convex portion 2 of the base B is locked at the first locking convex lines 49 of the connecting base body Jb, the base B is prevented from slipping off the aforementioned connecting base body Jb, and the connecting state of both of them is stable, thus making it possible to carry out the lay-out operation of the cable K quickly and efficiently.

Next, an operation for assembling the housing member T by covering the cover C with the base B is performed. In the state in which the fitting portions 3 of the cover C and the fitted portions 4 of the base B are positioned along the longitudinal direction S so as to approximately correspond to each other, the cover C is slightly pressed against the base B from above the base B. Then, the locking projections 9 of the cover C are locked at the locked projections 10, and the housing member T in the long cylindrical shape is formed. The convex lines 121, which project from all over the peripheral surface of the housing member T including the convex portions 1 of the cover C and the convex portions 2 of the base B, are formed along the longitudinal direction of the housing member T at approximately the same pitches. The portion of the housing member T of the aforesaid dimension U corresponds to a connected portion 123 connected to the connecting tool J (see Figure 21).

Next, an operation for assembling the connecting tool J by covering the connecting base body Jb with the connecting cover body Jc connected to the aforesaid connecting base body Jb is performed. The tongue-shaped locking piece 66 and the fitting grooves 68 of the aforesaid engaging portion 65 of the connecting cover body Jc, and the engaged groove 46 and the fitting claw pieces 48 of the engaged portion 45 of the corresponding connecting base body Jb are positioned along the longitudinal direction S of the housing member T. Thereafter, the connecting cover body Jc is turned, and the engaging portion 65 of the connecting cover body Jc is engaged with the engaged portion 45 of the connecting base body Jb from above the second wall portion 44 of the connecting base body Jb, whereby the short cylindrical connecting tool J is formed. As described above, the connecting cover body Jc covers the connecting base body Jb, and thereby the aforesaid connected portions 123 of the two housing members T housing the cable K are connected to the connecting tool J. In the connected portion 123, the second convex portion 1 of the cover C from the end surface of the housing member T is locked at the pair of the second locking convex lines 69 of the body portion 61 of the connecting cover body Jc. In this manner, the convex portion 2 of the base B and the convex portion 1 of the cover C are locked by the respective corresponding locking convex lines 49 and 69 which are formed on the inner surfaces of the respective body portions 41 and 61. Accordingly, in the connecting state in which two of the long cylindrical housing members T are connected by the short cylindrical connecting tool J, there is no fear that the base B and the cover C which construct the aforesaid housing member T are not detached from the aforesaid connecting tool J.

In the embodiment shown in Figure 17 to Figure 27, the case in which the housing member T is in the corrugated shape and the number of convex lines 121 at both end portions of the housing members T connected to the connecting tool J is shown, but it is suitable if at least one of the aforesaid convex line which is to be connected to the housing member is included. The connecting operation for both of them can be performed with the connecting state of the base B and the connecting base body Jb being stabilized without impairing the function of preventing the aforesaid rise at all. Further, the connecting base body and the connecting cover body, which construct the connecting tool, may not be connected, and may be of separate structures.

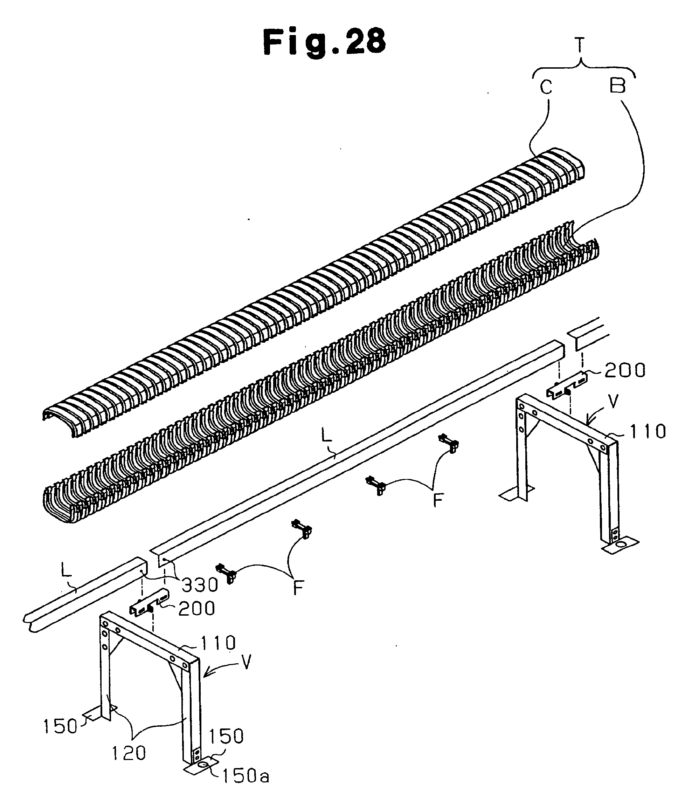

Next, a fourth embodiment of the present invention will be explained based on Figure 28 to Figure 38(b). This embodiment is a structure in which the housing member T is placed in a state in which it is laid on racks V adjacent to each other in a state in which the housing member T does not bend. The housing member T of this embodiment is the same as the housing member T of the embodiment in Figure 1 to Figure 10, and therefore the explanation thereof will be omitted.

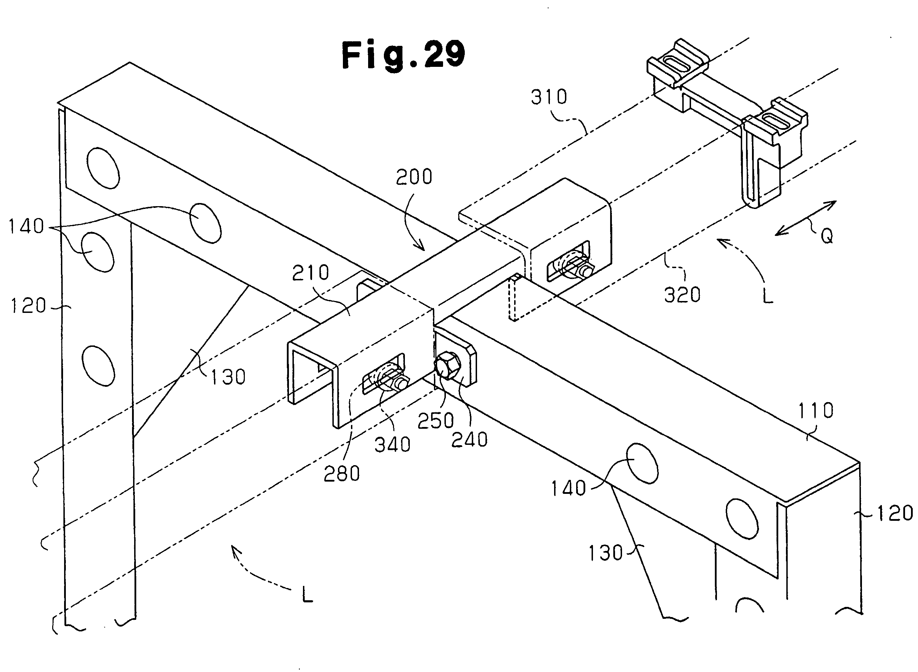

The rack V includes a horizontal member 110 and two vertical members 120 constructed by an angle bar which has an L-shape in section, as shown in Figure 28 and Figure 29. The three members 110 and 120 are integrally assembled via a pair of connecting plates 130 and a plurality of fixing bolts 140 to be in a portal shape. A base plate 150 is mounted to a lower end of each of the vertical members 120. A bolt insertion hole 150a which allows the insertion of a fixing bolt not shown is formed in each of the base plates 150. The rack V is used when the housing member T is arranged in a place which is not flat, or the like. A plurality of racks V are fixed onto the ground at the spaces corresponding to the length of rail bodies L. More specifically, concrete of a predetermined thickness is provided at the installation position of the rack V, and a fixing bolt inserted through the bolt insertion hole 150a of each of the base plates 150 is screwed into an anchor nut (not shown) which is buried inside the concrete layer, whereby the rack V is fixed to the aforesaid concrete layer.

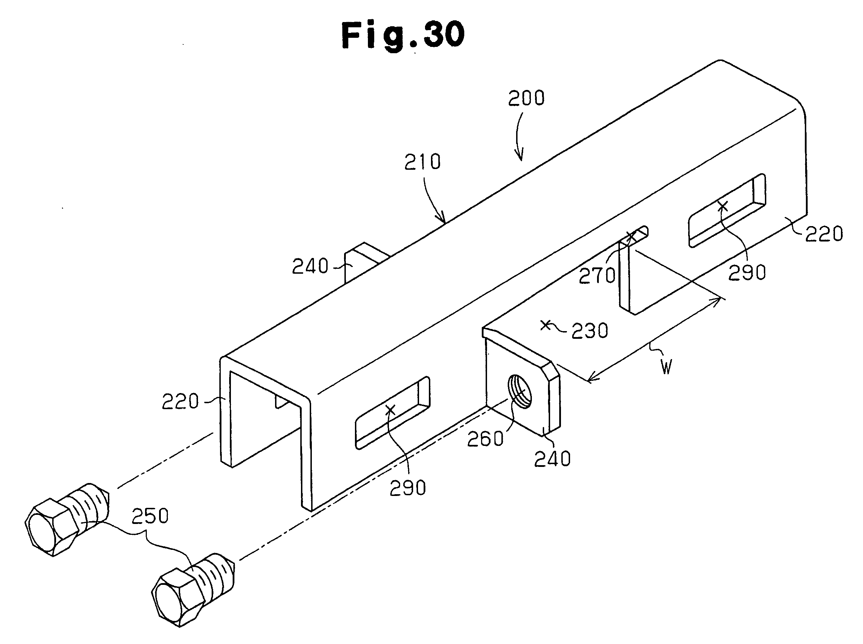

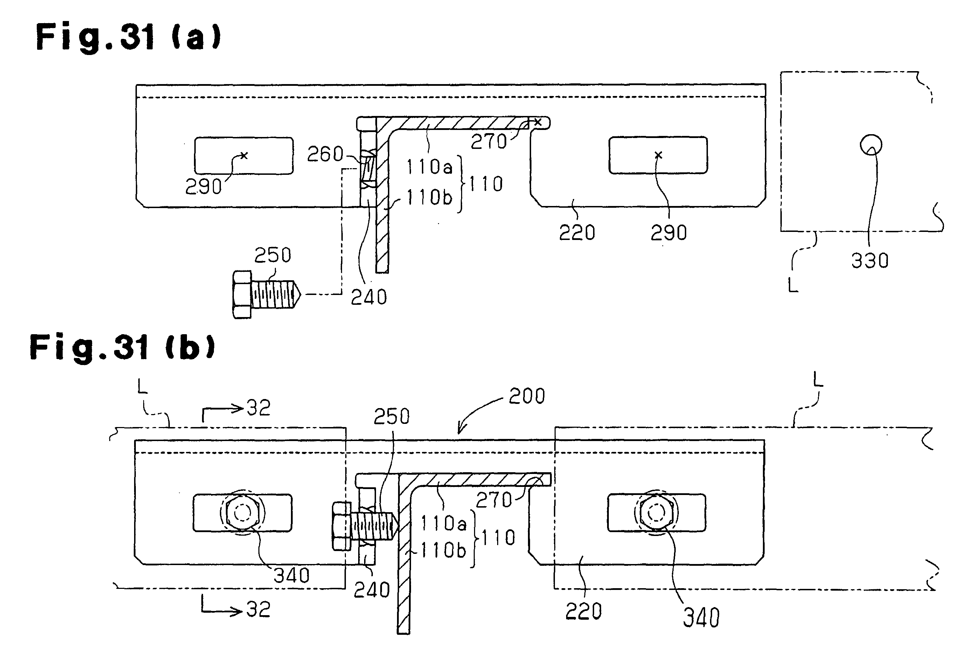

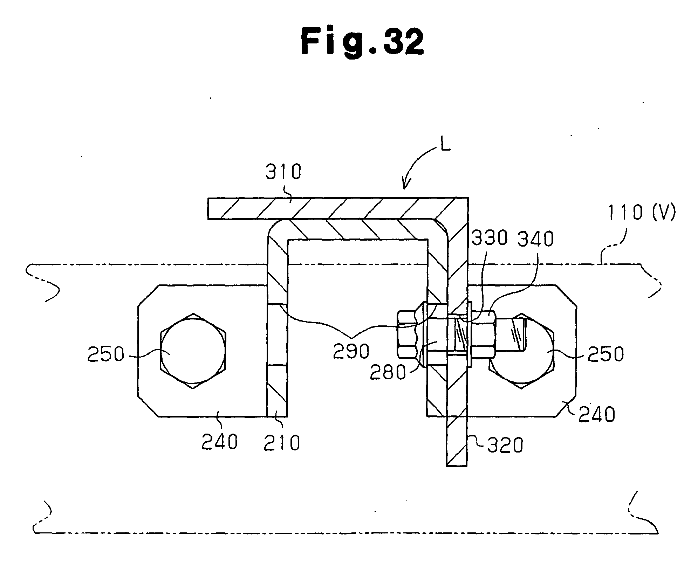

Each of the rail bodies L is formed by the angle bar that is L-shaped in section. The rail bodies L are connected to each other via a rail connecting tool 200. The rail connecting tool 200 is fixed to the horizontal member 110 of the rack V. As shown in Figure 29 to Figure 31(b), a body 210 of the rail connecting tool 200 which forms a U-shape in section includes a pair of side plate portions 220. A fitting space 230 is formed by partially notching both the side plate portions 220, in a central portion in the longitudinal direction of the body 210. The horizontal member 110 of the rack V is fitted into the fitting space 230. In order to define the space 230, a folded plate portion 240, which is folded in the perpendicular direction to the surface of the side plate portion 220 extending in the longitudinal direction, is formed at a part of each of the side plate portions 220. A female screw 260 into which a bolt 250 having a pointed tip end portion is screwed, is formed in each of the folded plate portions 240. An opening width W (see Figure 30) of the fitting space 230 is formed to be slightly larger than the width of the horizontal member 110 so that the horizontal member 110 of the rack V can be inserted. In a part of the side plate portion 220 opposed to the folded plate portion 240 at an upper end portion of the fitting space 230, an insertion groove 270 for inserting an end portion in the width direction of the horizontal member 110 of the rack V therein is formed to continue to the aforesaid fitting space 230. At both end portions of each of the side plate portions 220, bolt insertion holes 290 for inserting connecting bolts 280 therethrough, which connect the rail body L to the body 210, are formed respectively to extend along the longitudinal direction of the side plate portion 220 (See Figure 30 and Figure 32).

An operation for placing the rail body L between the racks V adjacent to each other and fixed to the ground at a space corresponding to the length of the rail body L, and fixing the rail connecting tool 200 for connecting the rail bodies L to the rack V is carried out as follows. First, when the rail connecting tool 200 is fixed to the rack V, the rail connecting tool 200 is placed above the horizontal member 110 of the rack V, and the horizontal member 110 is fitted into the fitting space 230, as shown in Figure 31(a). Thereafter, as shown in Figure 31(b), the rail connecting tool 200 is moved along the width direction of the horizontal plate 110a of the horizontal member 110, and thereby an end portion in the width direction of the horizontal plate 110a is inserted into the insertion groove 270 which continues to the fitting space 230 of the rail connecting tool 200. Thereafter, the bolt 250 is screwed into each of the female screws 260 provided at a pair of the folded plate portions 240 of the body 210, and the pointed portion of its tip end is made to abut a vertical plate 110b of the horizontal member 110 of the rack V, which is to be propped up. Thereby, the end surface of the aforesaid horizontal plate 110a abuts the end surface of the aforesaid insertion groove 270, and the rail connecting tool 200 is fixed in a state in which the rail connecting tool 200 is perpendicular to the horizontal member 110 of the rack V.

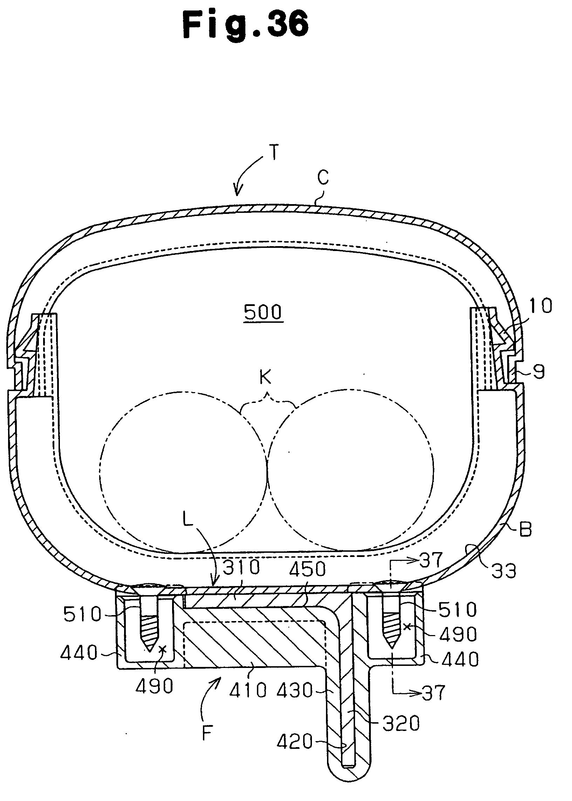

As shown in Figure 32, the rail body L includes a horizontal plate portion 310 and a vertical plate portion 320 which are respectively horizontal and vertical in its placed state. Bolt insertion holes 330 for inserting the connecting bolts 280 therethrough are provided at both end portions of the vertical plate portion 320 (see Figure 31(a)). The horizontal plate portion 310 of the rail body L is disposed so that an outer surface of the horizontal plate portion 310 is an upper surface. The aforesaid body 210 and the rail body L are overlaid on each other in a state in which each end portion of the corresponding rail body L covers each end portion of the body 210 of the rail connecting tool 200 fixed perpendicularly to the horizontal member 110 of the rack V. In this state, the connecting bolt 280 is inserted through the bolt insertion hole 290 of the body 210 and the bolt insertion hole 330 of the vertical plate portion 320 of the rail body L, as shown in Figure 32. The body 210 of the rail connecting tool 200 is connected to the rail body L via the connecting bolt 280 and a nut 340. As a result, the rail bodies L are connected to each other via the rail connecting tool 200 which is fixed to the horizontal member 110 of the rack V. The width of the rail body L is smaller than the width of the housing member T which is fixed on its horizontal plate portion 310 as shown in Figure 36.

The bolt insertion holes 290 provided at both the end portions in the longitudinal direction of the body 210 of the rail connecting tool 200 each form an elongate hole shape extending along the longitudinal direction of the body 210. Therefore, even if there is a variation in length of the space of the rail body L and each of the adjacent racks V, the rail bodies L can be connected to each other, and extension and contraction of the rail body L due to temperature change can be absorbed. For example, when the rail body L is laid on the rack V which is fixed to a metal bridge member forming a bridge, and a wire material or a pipe material is fixed to and placed at the rail body L, the space between the racks V changes, corresponding to the extension and contraction of the aforesaid bridge member due to temperature change. However, the aforesaid bolt insertion hole 290 provided at the body 210 of the rail connecting tool 200 can also cope with the change in the space between the racks V.

The housing member T is placed between the respective racks V in the state in which it is supported on the rail body L which is laid between the respective racks V that are adjacent to each other as described above. The housing member T supported by the rail body L is fixed to the aforesaid rail body L via a fixing tool F.

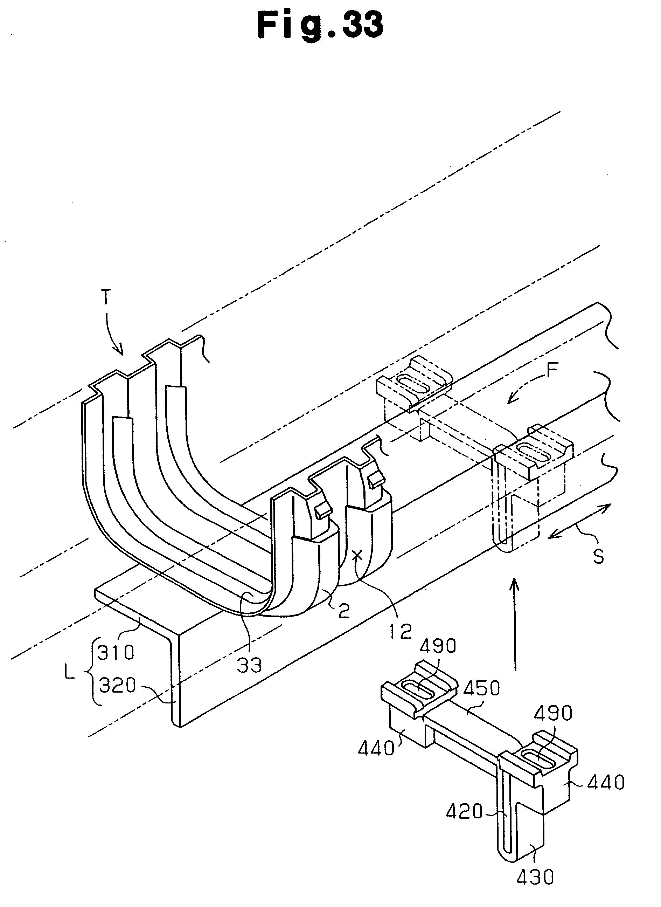

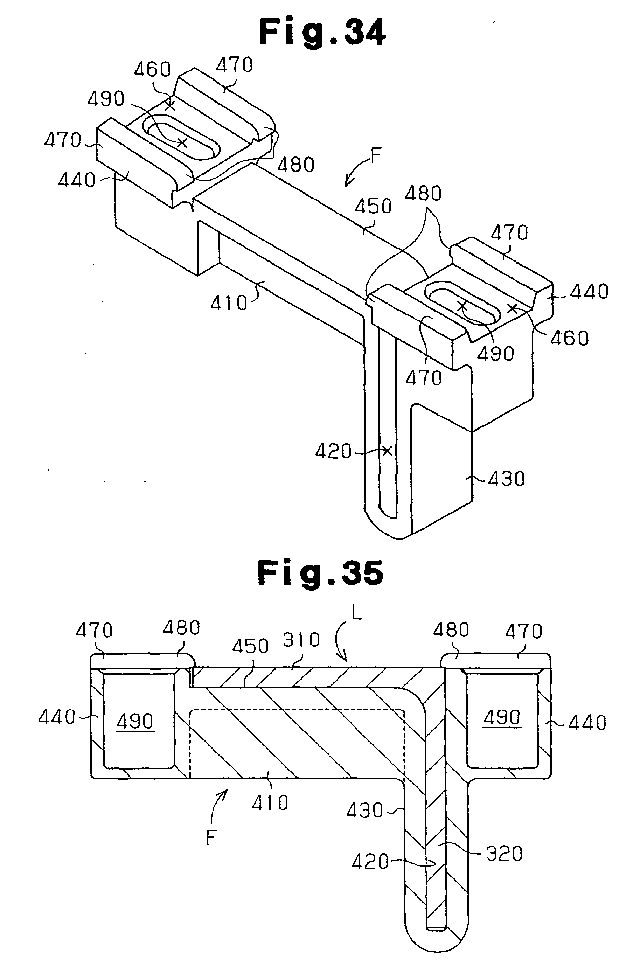

As shown in Figure 33 and Figure 35, the resin fixing tool F is held by the rail body L which is L-shaped in section, and forms an L-shape corresponding to the sectional shape of the rail body L. A first held portion 430 forming a U-shape is integrally formed at one end portion in the longitudinal direction of the body portion 410 of the fixing tool F. An insertion groove 420 which allows insertion of the vertical plate portion 320 of the rail body L is formed inside the first held portion 430 to extend along the vertical direction. The first held portion 430 is elastically deformable so that the opening of the insertion groove 420 becomes wide.

Fixing portions 440 for fixing the base B of the housing member T are provided respectively at both end portions in the longitudinal direction of the body portion 410 of the fixing tool F. Each of the fixing portions 440 is formed into a step shape so as to be higher than an upper surface of a second held portion 450 which is formed between the fixing portions 440. Each of the fixing portions 440 is provided with a concave portion 460 which allows insertion of the convex portion 2 of the base B of the housing member T in a state in which the fixing tool F is held by the rail body L. In the direction perpendicular to the longitudinal direction of the body portion 410 of the fixing tool F, a pair of convex portions 470 are formed at both end portions of each of the fixing portions 440. An engaging claw portion 480 which slightly extends toward the aforesaid second held portion 450 is provided at an end portion of each of the convex portions 470, which faces the second held portion 450. A tap screw lower hole 490, which forms an approximately rectangular parallelepiped shape and is opened to the upper surface, is formed at the concave portion 460 of each of the fixing portions 440. Each of the tap screw lower holes 490 extends along the longitudinal direction of the body portion 410.

A plurality of fixing tools F are used for one rail body L. As shown in Figure 33, when the fixing tool F is pressed against the rail body L in a state in which the fixing tool F is disposed under the rail body L, the vertical plate portion 320 of the rail body L is inserted into the insertion groove 420 of the first held portion 430. Further, the portion of the first held portion 430 is elastically deformed so that the upper surface opening of the insertion groove 420 becomes slightly wider, and the horizontal plate portion 310 of the rail body L is inserted into the portion of the second held portion 450 in the fitted state. After the insertion, the first held portion 430 is restored to the original shape, whereby the horizontal plate portion 310 of the rail body L engages with the engaging claw portions 480 (see Figure 35).

As shown in Figure 36, the fixing tool F is held with respect to the rail body L in a state in which each of the fixing portions 440 at both the end portions in the longitudinal direction project to both the sides in the width direction of the rail body L. In this held state, the fixing tool F is slidable along the longitudinal direction (placement direction Q of the housing member T) of the rail body L. Accordingly, after the base B of the housing member T is placed on the rail body L, the fixing tool F is pressed against the rail body L in its placement state, and thereby the fixing tool F is held by the rail body L. The fixing tool F held by the rail body L is slidable with respect to the aforesaid rail body L to correspond to the convex portion 2 of the base B of the housing member T. As shown in Figure 35, each of the fixing portions 440 faces the upper surface of the horizontal plate portion 310 of the rail body L in the state in which the fixing tool F is held by the rail body L.

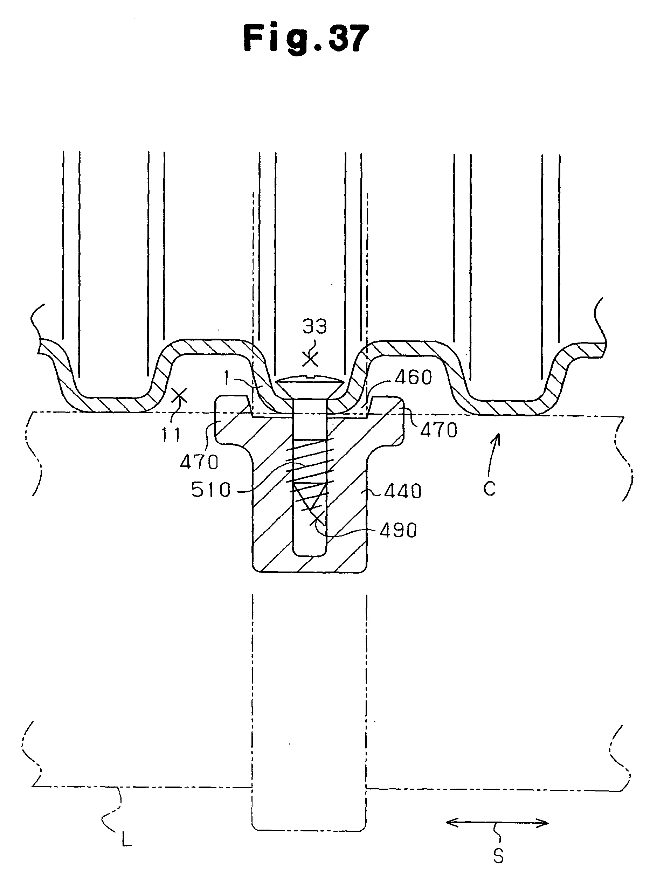

After the fixing tool F is first held at the rail body L and the base B of the housing member T is placed on the horizontal plate portion 310 of the aforesaid rail body L, if the positions of the convex portion 2 of the base B and the concave portion 460 of the fixing tool F are displaced with respect to the longitudinal direction S of the housing member T, the fixing tool F is slightly slid so that both of them correspond to each other (see Figure 36 and Figure 37). Next, the tap screw 510 is inserted into the concave portion 33 of the base B of the housing member T to penetrate through the base B, and the tap screw 510 which penetrates through the base B is screwed into the tap screw lower hole 490 of the fixing tool F. Thereby, the rail body L is sandwiched between the base B of the housing member T and the fixing tool F, and the base B of the housing member T is fixed to the rail body L via the fixing tool F.

In the aforesaid fixing tool F held at the rail body L, the respective fixing portions 440 at both its end portions project to both sides of the rail body L in the width direction. Accordingly, the fixing width of the housing member T, where the housing member T is fixed to the rail body L is wider than the width of the rail body L. Therefore, the housing member T can be stably supported on the rail body L, though the rail body L with a small width with respect to the housing member T is used. The tap screw lower hole 490 of the fixing tool F forms a long hole shape along the width direction of the rail body L or the base B of the housing member T, and therefore the screw position of the tap screw 510 along the aforesaid width direction has a predetermined allowable range. Therefore, it is easy to screw the tap screw 510.

Further, the places where the housing members T are placed by using the racks V outdoors are places having a comparatively large temperature change, such as the area along a railroad track, in many cases. Therefore, expansion and contraction of the housing member T due to temperature change are inevitably large. However, as described above, the fixing tool F, which fixes the housing member T to the rail body L, is slidable with respect to the aforesaid rail body L, and therefore when the housing member T expands and contracts due to temperature change and generates internal stress from tension or compression inside the housing member T, and the internal stress becomes larger than a predetermined value or more, the housing member T makes very small movement integrally with the fixing tool F to release the aforesaid internal stress. Accordingly, the housing member T is not unreasonably deformed by heat.

The base B of the housing member T is first placed on the horizontal plate portion 310 of the rail body L, and thereafter, the fixing tool F is held onto the aforesaid rail body L from below the rail body L, whereby it is also possible to fix the base B of the housing member T to the rail body L.

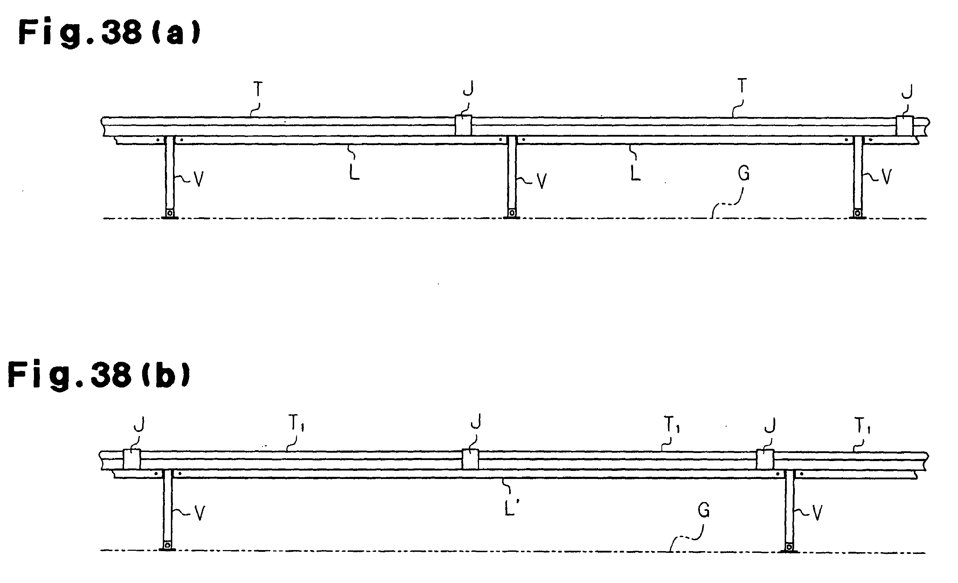

After the base B of the hosing member T is fixed to the rail body L via a plurality of fixing tools F, the cable K is housed in the housing space 500 inside the base B. Finally, the cover C covers the base B, whereby the lay-out operation of the cable K is finished [see Figure 38(a)]. The housing members T adjacent along the longitudinal direction S are connected to each other via the connecting tools J shown in the embodiment in Figure 17 to Figure 27.

The housing member T itself easily bends, but the entire housing member T is supported by the rail body L spanning between the racks V in this embodiment. Accordingly, the aforesaid bending can be prevented. The housing member T of this embodiment especially bends easily because it has the corrugated structure made of a resin, but this bending can be prevented in this embodiment. As a result, the operation of covering the base B with the cover C after laying the cable K is performed without hindrance.

The housing member T is fixed to the rail body L spanning between the racks V, and bending of the housing member T is prevented. Therefore, the space between the adjacent racks V can be made large, and the number of racks V per unit length is reduced, and the total number of the racks V is reduced.

As shown in Figure 38(b), in the case of a housing member T₁ which is shorter than the length of the housing member T in Figure 38(a), the space between he racks V can be made larger than the length of the housing member T₁. In the case shown in the drawing, the space between the racks V, and the length of a rail body L' spanning between the racks V are approximately twice as long as the length of the housing member T₁. In the placement structure of the conventional housing member, the space between the racks is shorter than the length of the housing member, or approximately equal to the length of the housing member. When the housing member becomes short, the number of the racks V required increases correspondingly. However, in this embodiment, as compared with the conventional structure, the total number of the racks V can be reduced. In Figure 38(a) and Figure 38(b), reference character G denotes the ground.

The embodiment shown in Figure 28 to Figure 38(b) may be applied to the placement of a housing member made of a metal plate in which the surface of the housing member does not have the concavo-convex structure.

For example, the rail bodies span between the brackets mounted on the wall surface, and the housing members are fixed to the rail bodies, whereby the housing members may be placed along the wall surface.

In the embodiment shown in Figure 28 to Figure 38(b), when the housing member T is fixed to the rail body L, the housing members T are laid on multi-tiers, and all the housing members T may be fixed to the rail body L in a state in which they are tied in bundle.

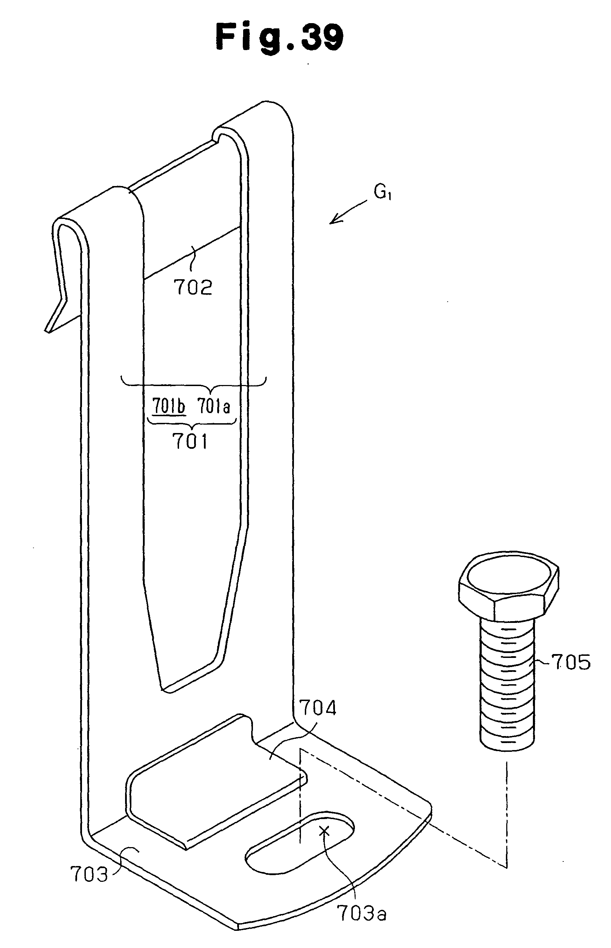

Next, a fifth embodiment of the present invention will be explained based on Figure 39 to Figure 43. The housing member T in this embodiment is the same as the housing member T shown in Figure 1 to Figure 10, and therefore the explanation thereof will be omitted.

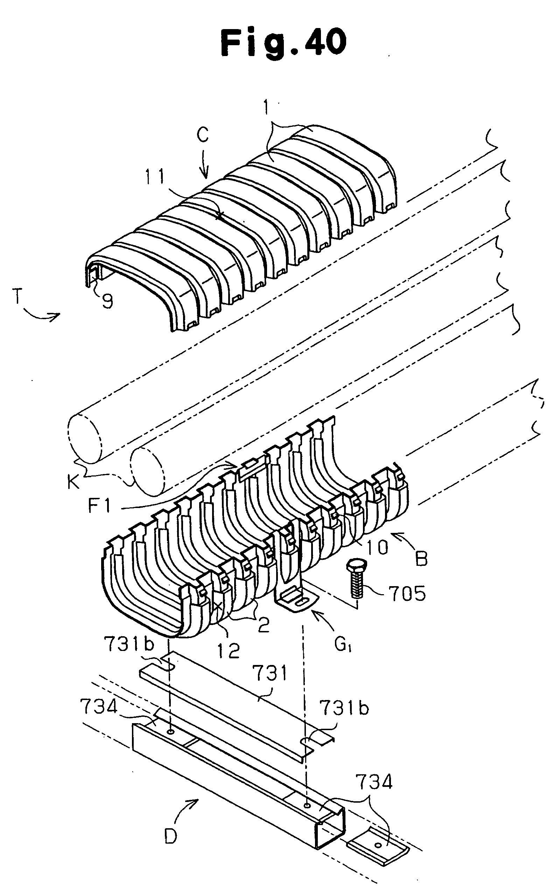

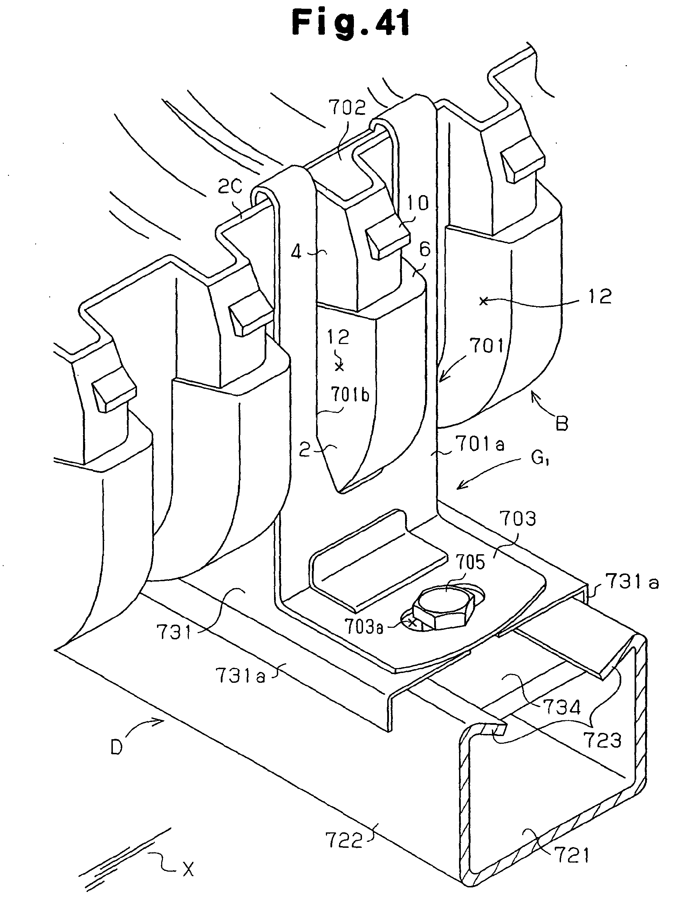

When the cable K is laid out according to the method of covering the base B with the cover C after placing the cable K inside the base B, the base B is fixed to a predetermined placement section X first (see Figure 40 and Figure 41). In this embodiment, a seat D forming a U-shape in section is fixed to the aforesaid placement section X, and the housing member T is fixed to the aforesaid seat D via a fixing tool G₁. As shown in Figure 41, the seat D has a bottom plate portion 721, and a pair of side plate portions 722 integrally formed at the bottom plate portion 721. A locking piece 723 which is folded inward at an angle exceeding 90° is formed at an end tip portion (portion which is an upper end in the usage state) of each of the side plate portions 722. The bottom plate portion 721 of the seat D is directly fixed to the placement portion X.

Next, the fixing tool G₁ of this embodiment will be explained based on Figure 39 to Figure 43. The fixing tool G₁ is formed by performing stamp forming by press and fold forming for a metal plate material. The fixing tool G₁ includes a plate-shaped body portion 701 having a length corresponding to the height of the base B of the housing member T, an approximately plate-shaped locking portion 702 which is formed by folding one end portion (portion which is an upper end in the usage state) in the longitudinal direction of the body portion 701 at approximately 180°, and a fixing portion 703 which is formed by folding the other end portion in the longitudinal direction of the aforesaid body portion 701 to the opposite side from the aforesaid locking portion 702 at approximately 90°. An insertion hole 701b extending along the longitudinal direction is formed in the central portion in the body portion 701.

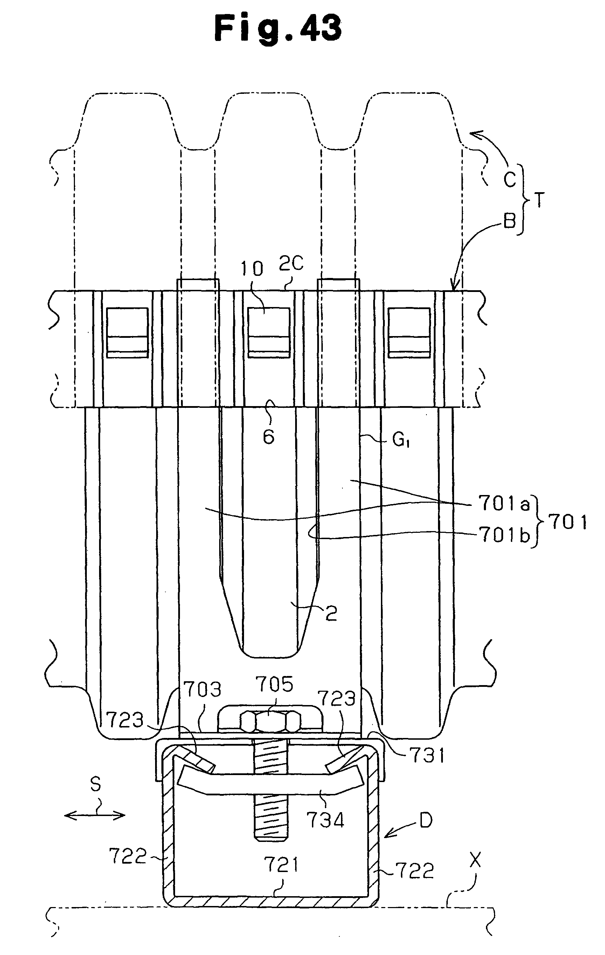

The body portion 701 of the fixing tool G₁ includes two fitting portions 701a which are fitted into the respective concave portions 12 adjacent to each other of the base B, and an insertion hole 701b which allows insertion of the convex portion 2 of the base B between the adjacent concave portions 12 and the fitting portion 4. The insertion hole 701b is continuously formed from a slightly upper portion from a connecting portion of the body portion 701 and the fixing portion 703 to an upper end of the aforesaid body portion 701. The width of only a lower end portion (portion near the fixing portion 703) of the insertion hole 701b gradually becomes narrower toward the lower position corresponding to the approximately trapezoidal shape of the sectional shape of the convex portion 2 of the base B. The width of the remaining portion of the insertion hole 701b is constant. When the convex portion 2 of the base B is inserted into the insertion hole 701b of the body portion 701, and each of the fitting portions 701a of the body portion 701 is fitted into the concave portion 12 of the base B, the convex portion 2 of the base B is inserted into the insertion hole 701b of the fixing tool G₁ without a clearance as shown in Figure 41 and Figure 43.

The locking portion 702 of the fixing tool G₁ has a little elasticity (spring action) to return it in the closing direction. The locking portion 702 elastically contacts an inner side of the end edge portion 2c of the base B of the housing member T. As shown in Figure 39, an end tip portion of the locking portion 702 (lower end portion in the usage state) is slightly folded outward. This folded portion facilitates locking of the base B to the above-described end edge portion 2c and the release thereof. The fixing portion 703 of the fixing tool G₁ is the flat-shaped portion directly in contact with a cover plate 731, which covers an outer side of an opening of the aforesaid seat D. In the fixing portion 703, a bolt insertion hole 703a in a long hole shape is formed along the width direction of the fixing tool G₁. A reinforcement portion 704 which bulges inward at the time of press forming is provided at a border portion of the body portion 701 and the fixing portion 703.

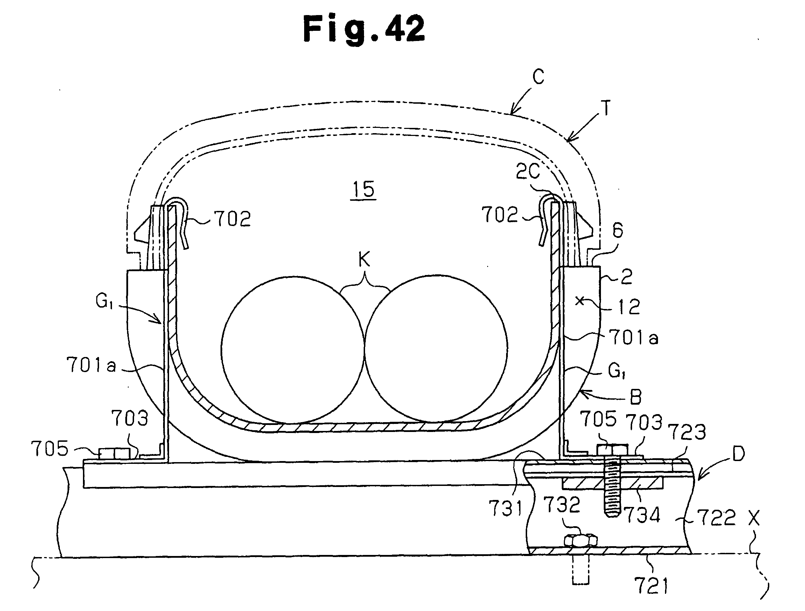

The aforesaid seats D are fixed to the placement section X, which is the lay-out section for the housing members T via fixing means, such as fixing bolts 732 (see Figure 42) at predetermined spaces therebetween along the lay-out direction S of the cable K. The process steps of dropping the cable K into the housing space 500 of the base B after fixing the base B of the housing member T to the aforesaid seat D by using the fixing tool G₁, and thereafter covering the base B with the cover C are carried out as follows.

As shown in Figure 40 and Figure 41, the upper opening of the seat D is first covered with the cover plate 731 including downward flange portions 731a at both ends in the width direction. The base B of the housing member T is placed on an upper surface of the cover plate 731. Next, while the convex portion 2 of the base B placed on the cover plate 731 is inserted into the insertion hole 701b of the body portion 701, the fixing tool G₁ is pressed against the base B from directly above each of the end edge portions 2c of the base B, and the locking portion 702 at the upper end portion of the fixing tool F₁ is locked at the aforesaid end edge portion 2c. Thereby, the aforesaid end edge portion 2c of the base B is held between the locking portion 702 of the fixing tool F₁ and the upper end portion of the body portion 701 opposed to the locking portion 702, and thus the fixing tool G₁ is mounted to the base B. Next, a fixing bolt 705 is inserted through the bolt insertion hole 703a of the fixing portion 703 of the fixing tool G₁ and each bolt insertion hole 731b formed at both end portions in the longitudinal direction of the aforesaid cover plate 731. The fixing bolt 705 and a plate nut 734, which is inserted inside the seat D, are screwed to each other, and the portion of the specific convex portion 2 of the base B is fixed to the aforesaid seat D via a pair of fixing tools G₁. Since the bolt insertion hole 703a which is formed in the fixing portion 703 has an elongate hole shape along the lay-out direction S of the cable K, it is possible to fix the base B to the seat D via the fixing tool G₁ even when the convex portion 2 of the base B is not located at the center of the width direction of the seat D.

Each bolt insertion hole 731b formed in both ends of the longitudinal direction of the cover plate 731 form elongate hole-shapes extending along the longitudinal direction. Each of the bolt insertion holes 731b opens at a side surface of the aforesaid cover plate 731, and therefore it is possible to fix the base B to the seat D as follows. First, the upper opening of the seat D is covered with the cover plate 731, and the base B is placed on the cover plate 731. Next, the fixing bolt 705 which is inserted through the bolt insertion hole 703a of the fixing portion 703 of the fixing tool G₁ and the aforesaid plate nut 34 are slightly screwed to each other, and thereby the fixing tool G₁ and the plate nut 734 are temporarily assembled. In this temporarily assembled state, the fixing portion 703 of the fixing tool G₁ is positioned close to a head portion of the fixing bolt 705, with the fixing portion 703 and the plate nut 734 are spaced from each other as much as possible, and then while the fixing tool G₁ is moved to the base B from both end sides of the seat D, the aforesaid fixing bolt 705 is inserted into the bolt insertion hole 731b of the cover plate 731, and further, the plate nut 734 is further inserted into the inside of the seat D. In this state, a part of the convex portion 2 of the base B is inserted into the insertion hole 701b of the fixing tool G₁, and the lower end of the locking portion 702 of the fixing tool G₁ is located at an upper position from the end edge portion 2c of the base B. Next, when the fixing tool G₁ is pressed down with respect to the base B, the locking portion 702 is fitted into the end edge portion 2c of the base B and locked. Finally, the plate nut 734 and the fixing bolt 705 are completely screwed to each other by rotating the fixing bolt 705. As a result, the base B is fixed to the seat D via the fixing tool G₁, and since the plate nut 734 is in a square shape, it does not rotate with the fixing bolt 705 when the fixing bolt 705 rotates.

In this state, the base B of the housing member T is fixed to the seat D via a pair of the fixing tools G₁ which are placed to oppose to each other along the width direction of the base B in each of a plurality of spots at predetermined intervals along its longitudinal direction. A pair of the fitting portions 701a, which form the body portion 701 of the fixing tool G₁, are fitted into the concave portions 12 of the base B. Therefore, the base B, which is fixed to the seat D via the fixing tool G₁, does not move along its longitudinal direction. In this embodiment, the locking portion 702 of the fixing tool G₁ is locked in a state in which the locking portion 702 of the fixing tool G₁ covers the aforesaid end edge portion 2c of the aforesaid base B, and therefore fixing of the base B to the seat D is ensured.

As described above, the base B of the housing member T is brought into the state in which it is firmly fixed to the seat D by a pair of the fixing tools G₁ at each of a plurality of spots along the longitudinal direction, and the cable K is sequentially dropped into the housing space 500 from above the housing space 500 of the aforesaid base B and placed. Since the base B is firmly fixed to the each of the seats D, the light base B does not spring up or does not move in the longitudinal direction due to the impact at the time of dropping the cable K, even at the time of dropping the cable K. Accordingly, the housing operation (lay-out operation) of the cable K into the housing space 500 of the base B is smoothly carried out.

After the cable K is housed in the housing space 500 of the base B, the base B fixed to the seat D is covered with the cover C. At the outer side of the convex portion 2 and the concave portion 12 of the base B, the convex portion 1 and the concave portion 11 of the cover C are respectively disposed, and the fitted portion 4 (locked projection 10) of the base B and the fitting portion 3 (locking projection 9) of the cover C are fitted to each other. The lower end surface of the cover C abuts the abutting step portion 6 which is formed at the portion near the upper end of the convex portion 2 of the base B. Thereby, the cover C is not easily detached from the base B.

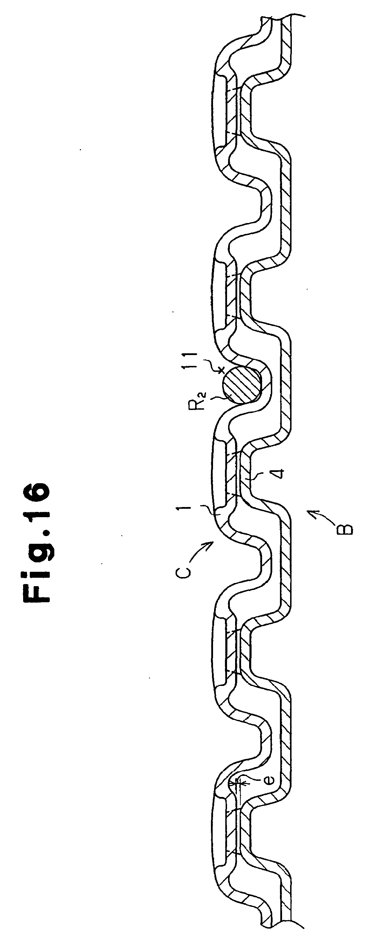

In a state in which the cover C covers the base B, a larger clearance e (see Figure 16) than the plate thickness of the metal plate material, which forms the fixing tool G₁, is formed between each of the convex portions 1 and 2 and each of the concave portions 11 and 12. Accordingly, even in the state in which the fixing tool G₁ is mounted to the base B as described above, the cover C can cover the base B without hindrance. The locking portion 702 of the fixing tool G₁ is completely covered with the cover C and protected. Therefore, the external force does not directly act on the aforesaid locking portion 702. Accordingly, after the cover C covers the base B, the locking portion 702 of the fixing tool G₁ is more difficult to detach from the base B.

Not only the base B is fixed to the seat D via the fixing tools G₁, but also the body portions 701 are fitted into the concave portions 12 at both sides of the base B. Therefore, deformation (especially, thermal deformation) of both side portions of the base B is prevented. Thereby, when the cover C covers the base B, the aforesaid fitting can be prevented from being released for a long period of time, after the locking projection 9 and the locked projection 10 are engaged with each other.

The above-described lay-out example of the cable K is an example in which the base B of the housing member T is fixed to the seat D fixed to the placement section X via the fixing tools G₁. For example, when the placement section forms a plane shape, and when the base B of the housing member T is directly fixed to the placement section, there are no or few limitations in the fixing position of the housing member T to the placement section. Therefore, it is possible to previously mount the fixing tools G₁ to a plurality of spots at predetermined intervals along the longitudinal direction of the base B and place the bases B in the aforesaid placement section X in this state. This enhances the efficiency of the fixing operation of the base B to the placement section X. Further, the housing member T is not limited to the case in which it is placed at the horizontal part, but it may be placed along the vertical direction of a vertical wall of a building or the like, and in this case of vertical placement, the base B of the housing member T can be fixed to the vertical wall by the fixing tool G₁ according to this embodiment.

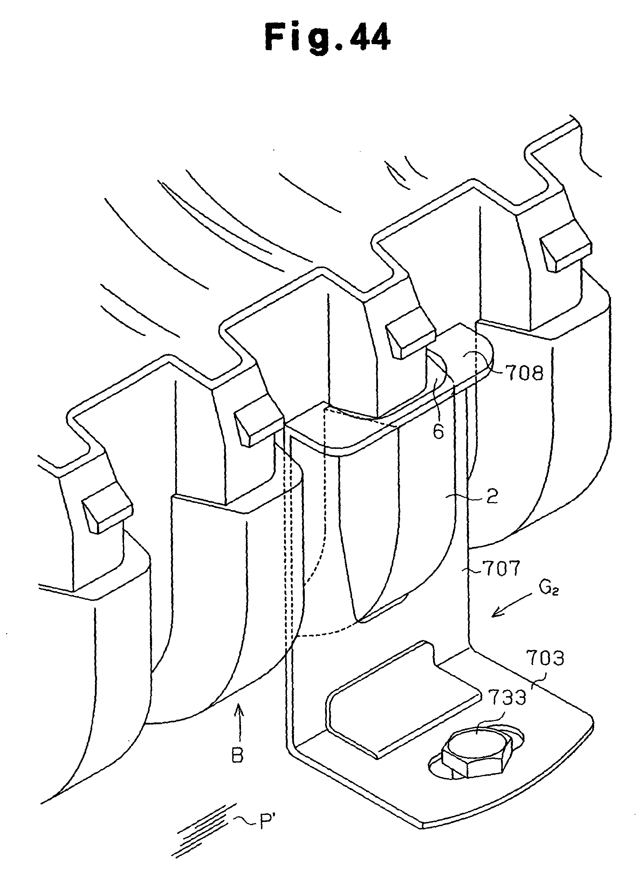

Next, a fixing tool G₂ in a sixth embodiment of the present invention will be explained based on Figure 44. The fixing tool G₂ of this embodiment differs in the construction of the body portion 701 and the locking portion 702 of the fixing tool G₁ shown in Figure 39 to Figure 43. The fixing tool G₂ includes a body portion 707, a locking portion 708 and the fixing portion 703. The locking portion 708 is formed by folding an upper end portion of the body portion 707 in the same direction as the fixing portion 703 at an approximate right angle, and partially abuts the abutting step portion 6 of the base B. The outer side surfaces of both the end edge portions (lower end portions in the usage state) of the convex portion 2 of the cover C are recessed inward from the other portions because the locking projections 9 are formed at their inner sides.

When the cover C covers the base B, the end surface of the convex portion 2 of the cover C abuts the aforesaid abutting step portion 6 of the base B. In this state, the aforesaid end surface of the cover C does not abut the outer side portion of the aforesaid abutting step portion 6, but the outer side portion of the aforesaid abutting step portion 6 remains as it is in the exposed state. The locking portion 708 of the aforesaid fixing tool G₂ abuts the aforesaid exposed portion of the abutting step portion 6 of the base B. As a result, the base B can be fixed to the placement section X by using the fixing tool G₂ in state in which the cover C covers the base B. The placement section X' shown in Figure 44 is in a planar shape, and the base B of the housing member T is directly fixed to this planar placement section X'.

In each of the embodiments shown in Figure 39 to Figure 44, the body portions 701 and 707 of each of the fixing tools G₁ and G₂ are each provided with a pair of fitting portions 701a, which are fitted into the concave portions 12 at both sides of the convex portion 2 of the base B, at both sides of the insertion holes 701b. However, the fixing tool is not limited to this construction, but it is possible to adopt the construction in which the fixing tool is fitted into three or more of the continuous concave portions 12 of the base B, that is, the construction having three or more of the fitting portions 701a and having a plurality of insertion holes 701b. The present invention includes a fixing tool with the construction having, between two fitting portions 701a that are fitted into the two concave portions 12 of the base B, which are not continuous, for example, the insertion hole 701b, into which a plurality of continuous convex portions 2 provided between the aforesaid two concave portions 12 that are not continuous can be inserted. Here, the width of the insertion hole into which a plurality of continuous convex portions 2 can be inserted is equal to the length between both outer side edges of the group of the aforesaid plurality of continuous convex portions 2. This makes it possible to fix the base B to the placement section more firmly. On the other hand, it is possible to fix the base B even with a fixing tool with the construction having only one fitting portion 701a that is inserted into one concave portion 12 of the base B.

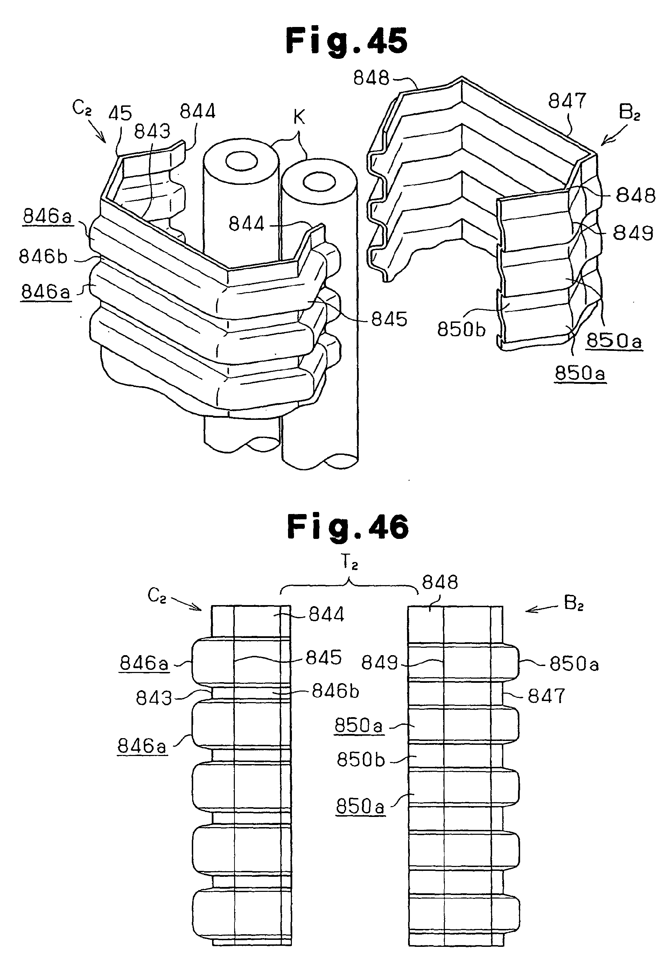

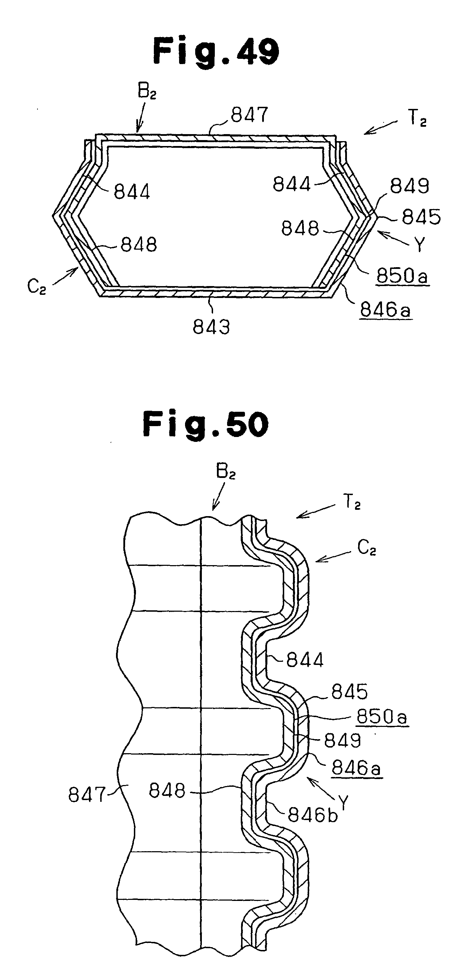

Next, a seventh embodiment of the present invention will be explained based on Figure 45 to Figure 50. A housing member T₂ in this embodiment has a construction in which the cover C and the base B of the housing member T of the embodiment in Figure 1 to Figure 10 are modified.

As shown in Figure 45, the housing member T₂ which is in an elongate shape and made of a synthetic resin is used for housing within the inside thereof the cable K laid along a wall surface as a structure inside a building and for protecting the cable K. The housing member T₂ includes a base B₂ housing the cable K and a cover C₂.

As shown in Figure 45 and Figure 46, the cover C₂ forming an approximately inverted U-shape in section includes an upper wall 843 and a pair of side walls 844 which are opposed to each other. Each of the side walls 844 is formed to be bent to bulge outward, and a bulged cover portion 845 is formed at the bulged region. The bulged cover portion 845 functions as detachment restraining means, which restrains the cover C₂ from being easily detached from the base B₂ in a state in which the cover C₂ is assembled to the base B₂. A plurality of cover convex portions 846a, which continuously extend along the circumferential direction of the cover C₂, are formed on the cover C₂. Cover concave portions 846b are formed between the adjacent cover convex portions 846a.

The base B₂ which forms an approximate U-shape in section includes a bottom wall 847 and a pair of side walls 848 which are opposed to each other. Each of the side walls 848 is formed to be bent to bulge outward, and a bulged base portion 849 is formed at the bulged region. The bulged base portion 849 functions as the aforesaid detachment restraining means together with the bulged cover portion 845. A plurality of base convex portions 850a, which extend continuously along a peripheral direction of the base B₂, are formed on the base B₂. Base concave portions 850b are formed between the adjacent base convex portions 850a.

Though not shown, the cover convex portion 846a and the base convex portion 850a each have approximately the same dimension Q₂ in the width direction. A pitch P₂ of the cover convex portion 846a and the pitch P₂ of the base convex portion 850a are equal to each other. A width W₅ of the cover convex portion 846a is larger than a width W₆ of the base convex portion 850a.

The base convex portion 850a is fitted in the cover convex portion 846a, and the bulged cover portion 845 and the bulged base portion 849 are locked to each other, whereby the base B₂ and the cover C₂ are assembled to form the housing member T₂. In the assembled state of the base B₂ and the cover C₂, the cover convex portion 846a and the base convex portion 850a are overlaid on each other to form an overlaid section Y, and both the convex portions 846a and 850a are fitted to each other at the overlaid section Y.

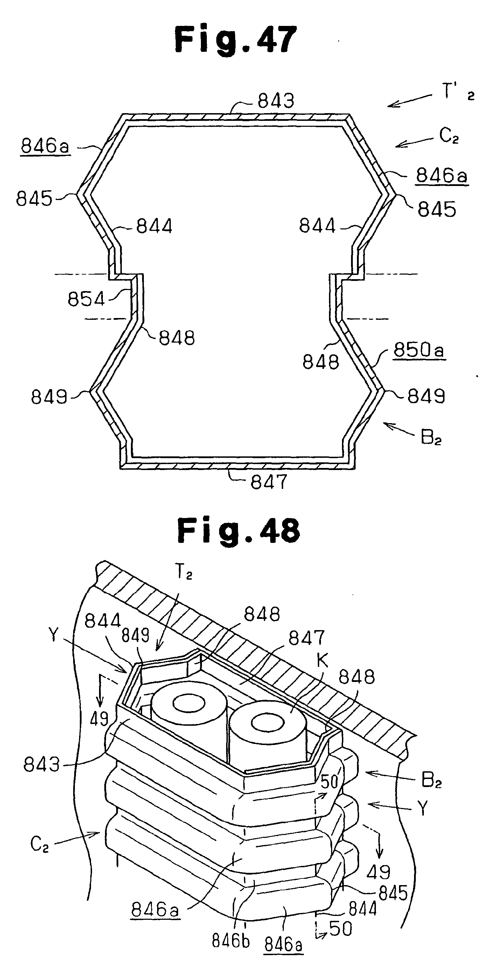

Next, a cylindrical intermediate molded product T₂' made of the synthetic resin before the housing member T₂ is formed will be explained. As shown in Figure 47, the intermediate molded product T₂' is formed into an elongate shape having uniform wall thickness, which is in an approximate square-shape in front sectional view. The aforesaid cover C₂ and the base B₂ are integrally formed by being connected by a portion 854 to be cut off. Specifically, the intermediate molded product T₂' is formed by connecting both side walls 848 of the base B₂ and both side walls 844 of the cover C₂ at their respective end edges along their longitudinal direction via the portion 854 to be cut off. The intermediate molded product T₂' is divided into two, and thereby the aforesaid cover C₂ and the base B₂ are obtained.

Next, a method for forming the housing member T₂ by assembling the cover C₂ to the base B₂, and an operation of the housing member T₂ will be explained.

First, the base B₂ is fixed to a wall surface as a constructed structure in a building so that an opening extending in its longitudinal direction extends vertically, and thereafter the cable K is housed inside from the opening of the base B₂. Next, as shown in Figure 46, the cover C₂ is positioned in the longitudinal direction with respect to the base B₂ so that the cover convex portion 846a and the base convex portion 850a approximately correspond to each other, and the cover C₂ is pressed from above the base B₂.

End tips of the side walls 844 of the cover C₂ are pressed outward by the bulged base portion 849, and the side walls 844 of the cover C₂ are elastically deformed outward. When the cover C₂ is further pressed and the end tips of the side walls 844 pass the bulged base portion 849, and the bulged cover portion 845 corresponds to the bulged base portion 849, the side walls 844 are each restored to the original shape, and are disposed so that an inner surface of the bulged cover portion 845 is along an outer surface of the bulged base portion 849.

Namely, as shown in Figure 48, the bulged cover portion 845 is locked at the outer surface of the bulged base portion 849, and the end tip of the side wall 844 is located at an inner side of the base 841 from the bulged base portion 849. Accordingly, the bulged base portion 849 and the bulged cover portion 845 interfere with each other. Therefore, there is provided a structure in which the cover C₂ hardly slips off in the direction intersecting the longitudinal direction of the base B₂, that is, in the forward direction. In the aforesaid overlaid section Y, the base convex portion 850a is fitted in the cover convex portion 846a all over the height of the overlaid section Y.

In the housing member T₂ of this embodiment, the area in which the base convex portion 850a and the cover convex portion 846a are fitted to each other is viewed as large, and the area in which both the convex portions 850a and 846a interfere with each other can be viewed as large. As a result, the downward movement of the cover C₂ along the longitudinal direction of the base B₂ can be effectively restrained, and the cable K can be protected with the mounting state of the housing member T₂ being maintained without exposing the cover C₂ to the outside.

The cover C₂ is prevented from being detached from the base B₂ by locking the bulged cover portion 845 and the bulged base portion 849 by the recovery shape due to the elastic force of the side wall 848. Accordingly, the construction of the mold for molding the intermediated molded product T₂' can be simplified as compared with the case in which the locking projection 9 and the locked projection 10 are formed as in Figure 1 to Figure 10.

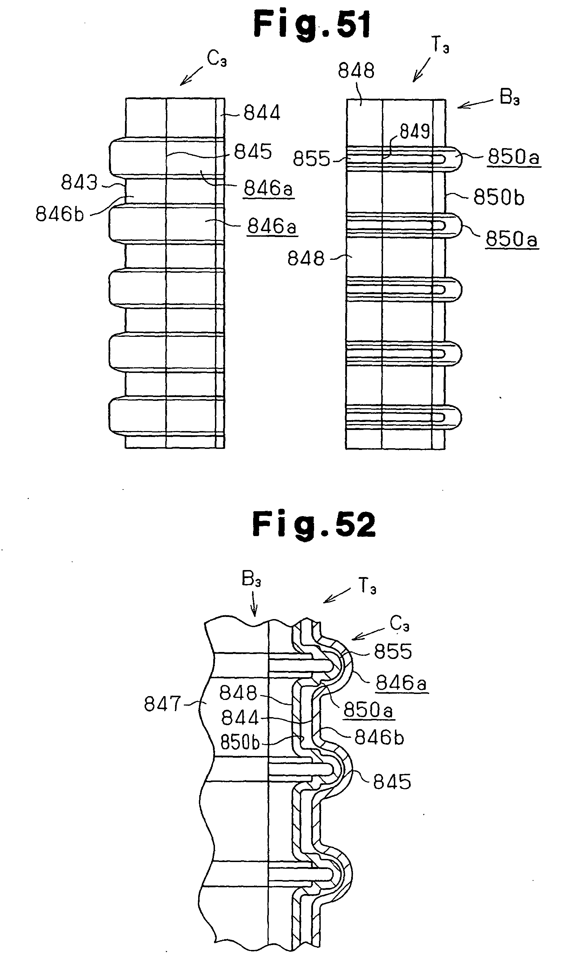

As in a housing member T₃ of an eighth embodiment shown in Figure 51 and Figure 52, a projection line 855 may be formed on the outer surface of the base convex portion 850a located at the side wall 844 of the housing member T₂ in Figure 45, along the direction in which the convex portion 850a of the base B₂ extends. In the case of this construction, the cover convex portion 846a is fitted on the base convex portion 50a, and the projection line 855 is housed in the cover convex portion 846a in a state in which the cover C₂ is assembled to the base B₂, as shown in Figure 52. As a result, since the base convex portion 850a and the projection line 855 abut the cover convex portion 846a, they interfere with one another, and the positional displacement of the cover C₂ along the length direction of the base B₂ can be effectively restrained. The aforesaid projection line 855 may be formed over the entire perimeter of the base convex portion 850a.

In the embodiment in Figure 45 to Figure 50, the locked projection 10 shown in Figure 7 may be formed on the outer surface of the base convex portion 850a and in the vicinity of the end portion of the opening of the base B₂. Further, in the inner surface of the cover C₂, the locking projection 9 at which the aforesaid locked projection 10 can be locked in the assembled state of the base 841 and the cover 842 may be formed on the side wall 844 at the side of the upper wall 843. In the assembled state of the base B₂ and the cover C₂, the aforesaid locking projection 9 is locked at the locked projection 10, and the bulged cover portion 845 is locked at the bulged base portion 849, whereby the cover C₂ can be prevented from being detached from the base B₂ easily.

In the embodiment in Figure 45 to Figure 50, the cover convex portion 846a may be formed to be fitted in the inside of the base convex portion 850a.

In the embodiment in Figure 45 to Figure 50, for example, the side of the cover convex portion 846a, which is beside the bottom wall 847, is fitted on the end tip portion of the base convex portion 850a, and the fitting position may be formed at a part of the overlaid section Y.

In the embodiment in Figure 45 to Figure 50, for example, a pipe material may be housed inside the housing member T₂, other than the cable K. As the aforesaid pipe material, the pipe material in which a fluid (a gas or a liquid) passes through is cited, and a refrigerant pipe and an air-conditioning pipe of an air-conditioner, and the like are cited.

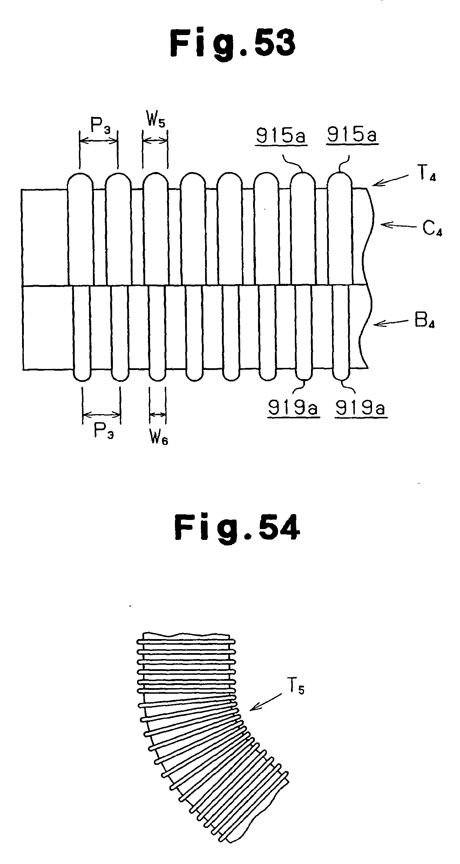

In a housing member T₄ of a modified example shown in Figure 53, a pitch P₄ of convex portions 915a of a cover C₄ and convex portions 919a of a base B₄ is formed to be shorter than the pitch P of the housing member T in Figure 5. A width W₅ of the convex portion 915a of the cover C₄ and a width W₆ of the convex portion 919a of the base B₄ are formed to be shorter than the corresponding width W₁ of the convex portion 1 of the cover C and the width W₂ of the convex portion 2 of the base B of the housing member T in Figure 5.

In a housing member T₅ of a modified example shown in Figure 54, the flexibility of the housing member T of the embodiment in Figure 1 to Figure 10 is further enhanced. Therefore, the housing member T₅ can be easily bent.

Each width QL of the convex portion 2 of the cover C and the convex portion 2 of the base B, the cover convex portion 846a of the cover C₂ and the base convex portion 850a of the base B₂, and the cover convex portion 915a of the cover C₄ and the base convex portion 919a of the base B₄ in each of the embodiments in Figure 1 to Figure 54 may be changed as follows. Explaining the housing member of the modified example with use of Figure 6, for example, the dimension QL of the convex portion 1 of the cover C is formed to be smaller than the dimension QL of the convex portion 2 of the base B, and the fitted portion 4 is formed in the inner side from the base B in Figure 6. In the case of the construction of the housing member of the modified example, when the cover covers the base, the sectional shape of the housing member forms a convex shape when the housing member is seen from the direction shown in Figure 6. In this construction, a space is formed between adjacent covers when a plurality of housing members are placed adjacently to each other along the longitudinal direction. Therefore, the convex portion of the cover can be easily caught by one's fingers, and the cover can be easily removed from the base.

Each of the housing members T, T₂, T₃, T₄ and T₅ shown in Figure 1 to Figure 54 may be placed on a floor inside a building. Even if a person kicks the cover C of the housing member T shown in Figure 4, for example, in its longitudinal direction with his or her foot, the movement of the cover C can be restrained by the fitting of the convex portion 2 of the base B and the convex portion 1 of the cover C. Accordingly, the problem with the cable K being exposed to the outside of the housing members T, T₂, T₃, T₄ and T₅ can be eliminated. Therefore, there is no fear of the cable K being directly stamped underfoot or a foot being caught by the cable K.

When a receptacle or the like is placed on the floor, each of the housing members T, T₂, T₃, T₄ and T₅ shown in Figure 1 to Figure 54 is bent, and thereby the housing members T, T₂, T₃, T₄ and T₅ can be placed on the floor by avoiding the receptacle and the like. For example, in the case of the housing member, which is formed into a planar shape along the longitudinal direction and is formed to be incapable of bending deformation, it is necessary to connect a plurality of housing members via separate connecting members formed by bending in order to avoid the receptacle. However, the housing members T, T₂, T₃, T₄ and T₅ can be bent, and therefore the housing members T, T₂, T₃, T₄ and T₅ can be placed on the floor without using the aforesaid connecting members. As a result, the placement operation for the housing members T, T₂, T₃, T₄ and T₅ can be performed easily and quickly.

## Claims

1. A housing member for housing an elongate material, the housing member **characterized by** comprising:
a base, said base having an opening extending along a longitudinal direction of the housing member and a plurality of convex portions arranged at predetermined pitches along said longitudinal direction, each of the convex portions extending along a circumferential direction of said base; and
a cover for covering the opening of said base, said cover comprising a plurality of convex portions arranged at predetermined pitches along said longitudinal direction, each of the convex portions of the cover extending along a circumferential direction of the cover, the arranged pitch of the convex portions of said base and the arranged pitch of the convex portions of said cover being the same or having a relationship of an integral multiple, and wherein, when said cover is assembled to said base, the convex portions of said cover and the convex portions of said base are fitted to each other so as to be overlaid on each other.

2. The housing member according to claim 1, **characterized in that** said cover is fitted onto an outer side of said base.

3. The housing member according to claim 1 or 2, **characterized in that** fitted portions are provided at both ends of each of the convex portions of said base, fitting portions are provided at both ends of each of the convex portions of said cover, and each of the fitting portions of said cover is fitted on the corresponding fitted portion of said base.

4. The housing member according to claim 3, **characterized in that** a locking projection is provided at an inner side of said each of the fitting portions, and a locked projection capable of being locked at the locking projection of the corresponding fitting portion is provided at an outer side of said each of the fitted portions.

5. The housing member according to claim 4, **characterized in that** an abutting step portion is formed at a border portion of said each of the fitted portions and the convex portion continuing to said each of the fitted portions, and when said cover covers said base, an end surface of said each of the fitting portions abuts the corresponding abutting step portion.

6. The housing member according to claim 5, **characterized in that** a cross-sectional shape of said each of the fitted portions is smaller than a cross-sectional shape of the corresponding convex portion.

7. The housing member according to any one of claims 1 to 6, **characterized in that** an approximately U-shaped reinforcement tool is disposed in at least one of an inner concave portion which is formed inside each of the convex portions of said base and an outer concave portion which is formed between a pair of adjacent convex portions of said cover.

8. The housing member according to claim 7, **characterized in that** said reinforcement tools are placed respectively in both of each of the inner concave portions of said base and each of the outer concave portions of said cover.

9. The housing member according to any one of claims 1 to 8, **characterized in that** the convex portions of said cover and the convex portions of said base are fitted to each other so as to prevent said cover from being displaced along the longitudinal direction of the housing member with respect to said base.

10. The housing member according to claim 1 or 2, **characterized in that** in a portion at which the convex portion of said cover and the convex portion of said base are overlaid on each other, restraining means which restrains said cover from being detached from said base is provided between the convex portion of said cover and convex portion of said base.

11. The housing member according to claim 10, **characterized in that** said cover and said base each comprise a pair of side walls opposed to each other along the longitudinal direction of the cover and the base, and said restraining means includes a bulged base portion which is formed by bulging the side wall of said base outward, and a bulged cover portion which is formed by bulging the side wall of said cover outward to be capable of being fitted on the bulged base portion.

12. The housing member according to any one of claims 1 to 11, **characterized in that** said elongate material is a cable which is laid inside a building.

13. The housing member according to any one of claims 1 to 11, **characterized in that** said elongate material is a fluid pipe which is laid indoors or outdoors and allows a flow of a fluid.

14. The housing member according to any one of claims 1 to claim 13, **characterized in that** said base is fixed to a structure constructed in a building.

15. A housing member for housing an elongate material, **characterized in that** said housing member is formed by dividing a cylindrical molded product made of a resin, which has annular convex portions arranged at predetermined pitches along a longitudinal direction of the housing member, into a base and a cover along said longitudinal direction, the base and the cover each have semi-annular convex portions arranged at said pitches along the longitudinal direction of the housing member, the cover is assembled to the base to cover an opening of the base, and when the cover is assembled to the base, the convex portions of the cover and the convex portions of the base are fitted to each other so as to be overlaid on each other.

16. A manufacturing method of the housing member according to any, one of claims 1 to 14, the method is **characterized by** including:
the step of preparing a cylindrical intermediate molded product made of resin which is formed by integrally molding said base and said cover with a portion to be cut off therebetween; and
the step of dividing said intermediate molded product along its longitudinal direction by cutting said portion to be cut off and obtaining said base and said cover which are separated from each other.

17. The manufacturing method according to claim 16, **characterized in that** said portion to be cut off of said intermediate molded product has a convex portion which is connected to the convex portions of said base and cover and has a smaller cross-sectional shape than cross-sectional shapes of the convex portions.

18. A connecting device comprising housing members for housing an elongate material and a connecting tool for connecting said housing members, **characterized in that** the housing member has a base and a cover which are assembled to each other, the base and the cover each have convex portions arranged at predetermined pitches along a longitudinal direction of the housing member, said connecting tool forms an approximately cylindrical shape, connecting ports are provided at both ends in an axial direction of the connecting tool, one end of said housing member is connected to each of the connecting ports, and the connecting tool has a connecting base body and a connecting cover body which are separable to divide said connecting port into two and capable of being assembled to each other; and
displacement preventing means, which connects both the base and the connecting base body by vertically overlaying the base and the connecting base body on each another, and prevents the base and the connecting base body connected to each other from being displaced vertically, is provided between said base and connecting base body.

19. A connecting tool for connecting housing members for housing an elongate material, **characterized in that** the housing member has a base and a cover which are assembled to each other, the base and the cover each have convex portions arranged at predetermined pitches along a longitudinal direction of the housing member, said connecting tool forms an approximately cylindrical shape, connecting ports are provided at both ends in an axial direction of the connecting tool, one end of said housing member is connected to each of the connecting ports, and the connecting tool has a connecting base body and a connecting cover body which are separable to divide said connecting port into two and capable of being assembled to each other; and
said connecting base body comprises displacement preventing means which connects both the base and the connecting base body by overlaying the base on the connecting base body, and prevents the base and the connecting base body as connected to each other from being displaced vertically.

20. The connecting tool according to claim 19, **characterized in that** said displacement preventing means includes a convex line provided at an inner surface of said connecting base body to extend along an axis line of the connecting base body so as to engage with a step portion provided at an outer surface in the vicinity of an opening of said base.

21. The connecting tool according to claim 20, **characterized in that** in sectional view along a surface perpendicular to the axis line of said connecting base body, said connecting base body forms an approximately U-shape, and has said convex lines at both end portions thereof.

22. The connecting tool according to any one of claims 19 to 21, **characterized in that** a locking convex line which is locked at the convex portion of said housing member is provided on the inner surface of said connecting base body to extend in the direction perpendicular to the axis line of the connecting base body.

23. The connecting tool according to any one of claims 19 to 21, **characterized in that** said connecting base body and connecting cover body are connected by a hinge to be relatively rotatable.

24. A placement structure for a cylindrical housing member having flexibility for housing an elongate material, **characterized in that** said housing member has annular convex portions arranged at predetermined pitches along a longitudinal direction of the housing member, said placement structure comprises racks and rail bodies laid on said racks, and said housing member is fixed to the rail body to extend along said rail body.

25. The placement structure according to claim 24, **characterized by** further comprising a fixing tool for fixing said housing member to said rail body.

26. The placement structure according to claim 24 or 25, **characterized in that** said housing member comprises a vertically separable base and cover, and said base is fixed on said rail body.

27. The placement structure according to any one of claims 24 to 26, **characterized by** further comprising a connecting tool for connecting both the adjacent rail bodies, and **characterized in that** the connecting tool is fixed to said rack.

28. A fixing tool for fixing a housing member, which has flexibility and includes a space for housing an elongate material inside, to a rail body laid on a rack, the fixing tool is **characterized by** having:
a held portion which is held at said rail body; and
a fixing portion facing an upper surface of the rail body to be able to fix said housing member to said rail body in a state in which said held portion is held at said rail body.

29. A fixing tool for fixing a housing member for housing an elongate material at a placement section, said housing member having a base and a cover which are assembled to each other, and the base and the cover respectively having convex portions arranged at predetermined pitches along a longitudinal direction of the housing member, said fixing tool is **characterized by** having:
a body portion fitted into a concave portion provided between both adjacent convex portions of said base;
a locking portion locked at a portion of said base, which does not interfere with mounting and dismounting of said cover to and from the base on an occasion of mounting and dismounting of said cover to and from the base to prevent said base from rising with respect to said placement section; and
a fixing portion fixed to said placement section.

30. The fixing tool according to claim 29, **characterized in that**
said body portion comprises:
fitting portions respectively fitted into a plurality of concave portions of said base; and
an insertion hole in which at least one of the convex portions of said base is able to be inserted.

31. The fixing tool according to claim 29 or 30, **characterized in that** said locking portion is locked at a portion in said base, which is covered with said cover.

32. The fixing tool according to claim 31, **characterized in that** said locking portion is locked at said base so as to cover end edge portions at both sides of said base.
